# EUROPÄISCHE PATENTANMELDUNG

(11) **EP 4 786 937 A1**
(43) Veröffentlichungstag der Anmeldung: **05.08.2026**
(21) Anmeldenummer: 25223946.2
(22) Anmeldetag: 16.12.2025
(51) Int. Cl.: G01L 1/16, G01L 5/167

(54) **AUFNEHMEREINHEIT ZUR MESSUNG VON KRAFT UND/ODER DREHMOMENT AN RÄDERN EINES FAHRZEUGES SOWIE MESSRAD FÜR EIN FAHRZEUG MIT SOLCH EINER AUFNEHMEREINHEIT**

(30) Priorität: 31.01.2025 EP 25155179
(71) Anmelder: Kistler Holding AG, 8408 Winterthur (CH)
(72) Erfinder: Oram, Christian, 8415 Berg am Irchel (CH); Moessinger, Gerd, 79787 Lauchringen (DE)

(57) **Zusammenfassung**

Die Erfindung betrifft eine Aufnehmereinheit zur Messung von Kraft und/oder Drehmoment an Rädern eines Fahrzeuges; mit mehreren Messeinheiten und einem Gehäuse, welche Messeinheiten im Gehäuse angeordnet sind, welches Gehäuse eingerichtet ist, die Kraft und/oder das Drehmoment auf die Messeinheiten zu leiten, welche Messeinheiten nach dem piezoelektrischen Messprinzip arbeiten und unter der Wirkung der Kraft und/oder des Drehmomentes elektrische Ladung erzeugen; mit mehreren elektrischen Leitungen und einer Durchführung, welche elektrischen Leitungen die elektrische Ladung von den Messeinheiten zur Durchführung ableiten, welche Durchführung am Gehäuse angebracht ist, und welche Durchführung eingerichtet ist, die elektrische Ladung nach ausserhalb des Gehäuses zu leiten; wobei die Aufnehmereinheit eine weitere Durchführung und eine weitere elektrische Leitung aufweist; wobei die weitere Durchführung am Gehäuse angebracht ist; wobei die weitere Durchführung eingerichtet ist, weitere elektrische Ladung von ausserhalb des Gehäuses in das Gehäuse zu leiten; und wobei die weitere elektrische Leitung die weitere elektrische Ladung im Gehäuse von der weiteren Durchführung zur Durchführung ableitet.

## Beschreibung

### Technisches Gebiet

Die Erfindung betrifft eine Aufnehmereinheit zur Messung von Kraft und/oder Drehmoment an Rädern eines Fahrzeuges sowie ein Messrad für ein Fahrzeug mit solch einer Aufnehmereinheit gemäss den Oberbegriffen der unabhängigen Ansprüche.

### Stand der Technik

Bei der Entwicklung von Fahrzeugen werden Messräder eingesetzt, um während des Betriebes des Fahrzeuges Betriebslastdaten zu ermitteln. Die Betriebslastdaten berücksichtigen wesentliche Parameter des Betriebes des Fahrzeuges wie Masse, Trägheit, Luft- und Rollwiderstand, Motorlast, Geschwindigkeit, usw. Aus den Betriebslastdaten lassen sich wichtige Erkenntnisse über die Betriebseigenschaften des Fahrzeuges schliessen.

Ein solches Messrad wird anstelle eines Serienrades am Fahrzeug montiert. Das Messrad verfügt über mehrere Aufnehmer, um Kraft und/oder Drehmoment, die während des Betriebes des Fahrzeuges auf das Messrad wirken, zu messen. Die Aufnehmer sind auf der Felge des Messrades im gleichen Abstand zur Nabe und zueinander angeordnet. Die Kraft und/oder das Drehmoment werden über den Radaufstandspunkt in das Messrad eingeleitet. Die Aufnehmer stellen für die gemessene Kraft und/oder das gemessene Drehmoment ein Messsignal bereit. Die Betriebslastdaten werden aus dem Messsignal ermittelt.

Die EP2116833B1 offenbart solch einen Aufnehmer zur Messung von Kraft und/oder Drehmoment an Rädern eines Fahrzeuges. Der Aufnehmer weist Quarzelemente auf, welche in einem Gehäuse - Messdose genannt - angeordnet sind. Die Messdose umgibt die Quarzelemente vollständig und schützt sie so vor schädlichen Umwelteinflüssen wie Staub, Feuchtigkeit, direkter Berührung, usw. Über die Messdose ist der Aufnehmer am Messrad befestigbar. Die Messdose nimmt die Kraft und/oder das Drehmoment auf und leitet sie auf die Quarzelemente. Die Quarzelemente arbeiten nach dem piezoelektrischen Messprinzip und erzeugen unter der Wirkung der Kraft und/oder des Drehmomentes elektrische Ladung als Messsignal. Der Aufnehmer weist elektrische Leitungen und eine Durchführung auf. Die Durchführung ist an der Messdose angebracht. Über die elektrischen Leitungen wird die elektrische Ladung von den Quarzelementen zur Durchführung abgeleitet. Die Durchführung leitet die elektrische Ladung nach ausserhalb der Messdose.

Das Messrad weist auch eine elektronische Schaltung auf, welche die elektrische Ladung der Aufnehmer verstärkt und in eine elektrische Spannung wandelt. Solch ein Messrad mit mehreren Aufnehmern und einer elektronischen Schaltung ist aus dem Datenblatt 9299A_000_993e_02.14 als Typ 9299A bekannt. Die elektrische Schaltung ist auf der Nabe des Messrades angeordnet. Das Messrad weist Messkabel auf, welche die Durchführungen der Aufnehmer mit der elektrischen Schaltung elektrisch verbinden. Das Messrad vom Typ 9299A weist sechs Aufnehmer mit jeweils einer Durchführung in der Messdose auf. Dabei sind die beiden Durchführungen von zwei direkt benachbarten Aufnehmern über ein Messkabel elektrisch miteinander verbunden. Dadurch sind sechs Aufnehmer über fünf Messkabel in Reihe geschaltet. Über ein sechstes Messkabel sind die sechs in Reihe geschalteten Aufnehmer mit der elektronischen Schaltung elektrisch verbunden.

Nun sind die Messkabel im Betrieb des Messrades Umwelteinflüssen wie Steinschlag, Nässe, usw. ausgesetzt und können beschädigt werden, was die Verfügbarkeit des Messrades beeinträchtigt. Auch werden die Messkabel um die einzelnen Messdosen herum zur Durchführung des Aufnehmers verlegt, was zeitaufwändig ist. Schliesslich werden die Messkabel beim Verlegen um die Messdosen gebogen. Diese Verbiegung führt zu mechanischen Spannungen. Im Betrieb des Messrades können sich die Messkabel mechanisch entspannen und bewegen. Diese Bewegung der Messkabel erzeugt aufgrund von Reibung im Messkabel elektrische Störladung, welche sich mit der im Messkabel abgeleiteten elektrischen Ladung überlagern und die Messung der Kraft und/oder des Drehmomentes verfälschen kann.

Aufgabe der vorliegenden Erfindung ist es, das Messrad vom Typ 9299A zu verbessern.

### Darstellung der Erfindung

Diese Aufgabe wird durch die Merkmale der unabhängigen Ansprüche gelöst.

Die Erfindung betrifft eine Aufnehmereinheit zur Messung von Kraft und/oder Drehmoment an Rädern eines Fahrzeuges; mit mehreren Messeinheiten und einem Gehäuse, welche Messeinheiten im Gehäuse angeordnet sind, welches Gehäuse eingerichtet ist, die Kraft und/oder das Drehmoment auf die Messeinheiten zu leiten, welche Messeinheiten nach dem piezoelektrischen Messprinzip arbeiten und unter der Wirkung der Kraft und/oder des Drehmomentes elektrische Ladung erzeugen; mit mehreren elektrischen Leitungen und einer Durchführung, welche elektrischen Leitungen im Gehäuse angeordnet sind und die elektrische Ladung von den Messeinheiten zur Durchführung ableiten, welche Durchführung am Gehäuse angebracht ist, und welche Durchführung eingerichtet ist, die elektrische Ladung nach ausserhalb des Gehäuses zu leiten; wobei die Aufnehmereinheit eine weitere Durchführung und eine weitere elektrische Leitung aufweist; wobei die weitere Durchführung am Gehäuse angebracht ist; wobei die weitere Durchführung eingerichtet ist, weitere elektrische Ladung von ausserhalb des Gehäuses in das Gehäuse zu leiten; und wobei die weitere elektrische Leitung im Gehäuse angeordnet ist und die weitere elektrische Ladung von der weiteren Durchführung zur Durchführung ableitet.

Die Erfindung betrifft auch ein Messrad für ein Fahrzeug; mit mehreren Aufnehmereinheiten zur Messung von Kraft und/oder Drehmoment an Rädern des Fahrzeuges; welches Messrad eingerichtet ist, am Fahrzeug montiert zu werden, und auf welches Messrad im montierten Zustand die Kraft und/oder das Drehmoment wirken; wobei jede Aufnehmereinheit mehrere Messeinheiten und ein Gehäuse aufweist, welche Messeinheiten im Gehäuse angeordnet sind, welches Gehäuse eingerichtet ist, am Messrad befestigt zu werden und im befestigten Zustand die Kraft und/oder das Drehmoment auf die Messeinheiten zu leiten; welche Messeinheiten nach dem piezoelektrischen Messprinzip arbeiten und unter der Wirkung der Kraft und/oder des Drehmomentes elektrische Ladung erzeugen; wobei jede Aufnehmereinheit mehrere elektrische Leitungen und eine Durchführung aufweist, welche elektrischen Leitungen im Gehäuse angeordnet sind und die elektrische Ladung von den Messeinheiten zur Durchführung ableiten, welche Durchführung am Gehäuse angebracht ist, und welche Durchführung eingerichtet ist, die elektrische Ladung nach ausserhalb des Gehäuses zu leiten; wobei mindestens eine Aufnehmereinheit eine weitere Durchführung und eine weitere elektrische Leitung aufweist; wobei die weitere Durchführung am Gehäuse angebracht ist; wobei die weitere Durchführung eingerichtet ist, weitere elektrische Ladung von ausserhalb des Gehäuses in das Gehäuse zu leiten; und wobei die weitere elektrische Leitung im Gehäuse angeordnet ist und die weitere elektrische Ladung von der weiteren Durchführung zur Durchführung ableitet.

Vorteilhafte Weiterbildungen der Erfindung sind in den abhängigen Ansprüchen geschützt.

### Kurze Beschreibung der Zeichnungen

Im Folgenden wird die Erfindung beispielhaft unter Beizug der Figuren näher erklärt. Es zeigen
- Fig. 1: eine schematische Ansicht eines Teiles eines Messrades 1 für ein Fahrzeug mit mehreren Aufnehmereinheiten 2, 3 - 3";
- Fig. 2: eine perspektivische Ansicht eines Teiles einer Zweifachsummierer-Aufnehmereinheit 2 des Messrades 1 gemäss Fig. 1;
- Fig. 3: eine Draufsicht auf einen Teil der Zweifachsummierer-Aufnehmereinheit 2 gemäss Fig. 2 mit entfernter Deckplatte 201;
- Fig. 4: eine perspektivische Ansicht eines Teiles einer Dreifachsummierer-Aufnehmereinheit 3 - 3'' des Messrades 1 gemäss Fig. 1;
- Fig. 5: eine Draufsicht auf einen Teil der Dreifachsummierer-Aufnehmereinheit 3 - 3" gemäss Fig. 4 mit entfernter Deckplatte 301;
- Fig. 6: eine perspektivische Ansicht, teilweise im Schnitt, eines Teiles einer Durchführung 25 der Zweifachsummierer-Aufnehmereinheit 2 gemäss Fig. 2 und 3;
- Fig. 7: eine perspektivische Ansicht, teilweise im Schnitt, eines Teiles einer Durchführung 35 - 35'' der Dreifachsummierer-Aufnehmereinheit 3 - 3" gemäss Fig. 4 und 5;
- Fig. 8: eine perspektivische Ansicht, teilweise im Schnitt, eines Teiles einer weiteren Durchführung 36 der Dreifachsummierer-Aufnehmereinheit 3 - 3" gemäss Fig. 4 und 5; und

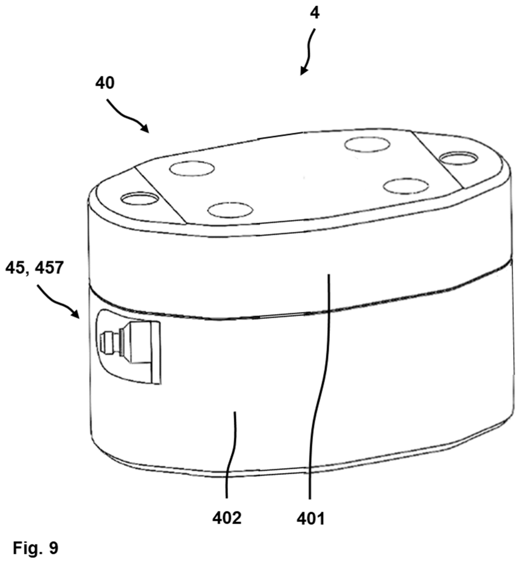

- Fig. 9: eine perspektivische Ansicht eines Teiles einer elektronischen Schaltung 4 des Messrades 1 gemäss Fig. 1.

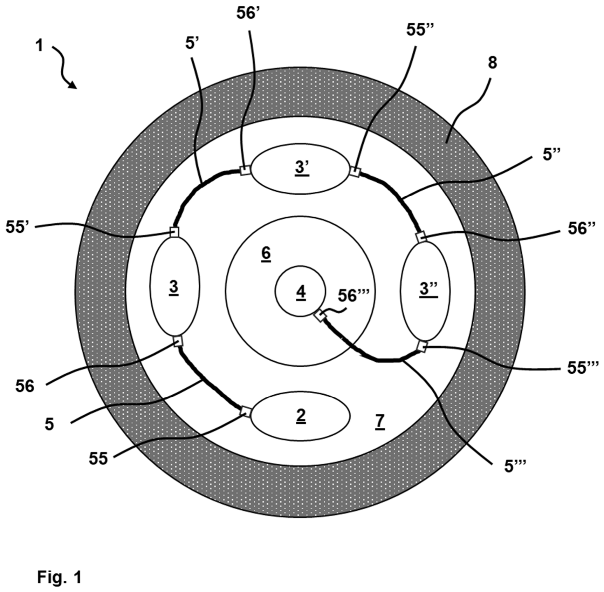

Gleiche Bezugszeichen bezeichnen in den Figuren gleiche Gegenstände. Gleiche Gegenstände des Messrades 1, welche in der Fig. 1 wiederholt dargestellt sind, werden mit Apostrophen hinter dem Bezugszeichen unterschieden.

### Wege zur Ausführung der Erfindung

Die Fig. 1 zeigt eine schematische Ansicht eines Teiles eines Messrades 1 für ein Fahrzeug.

Das Fahrzeug ist eingerichtet, auf einer Fahrbahn bewegt zu werden. Dabei ist das Fahrzeug über mindestens ein Rad im Kontakt mit der Fahrbahn. Beispielsweise ist das Fahrzeug ein Kraftfahrzeug, eine Eisenbahn, usw. Das Fahrzeug, das Rad und die Fahrbahn sind figürlich nicht abgebildet.

### DAS MESSRAD 1

Das Messrad 1 hat die Funktion, Kraft und/oder Drehmoment, die während des Betriebes des Fahrzeuges auf das Messrad wirken, aufzunehmen, um daraus Betriebslastdaten zu ermitteln. Das Messrad 1 weist eine Nabe 6, eine Felge 7, einen Reifen 8 und mehrere Montagemittel auf. Das Messrad 1 ist eingerichtet, über die Montagemittel anstelle eines Rades am Fahrzeug montiert zu werden. Die Montagemittel sind figürlich nicht abgebildet.

Im montierten Zustand ist das Messrad 1 über den Reifen 8 im Kontakt mit der Fahrbahn. Die Kontaktstelle wird als Radaufstandspunkt bezeichnet. Über den Radaufstandspunkt werden die Kraft und/oder das Drehmoment in das Messrad 1 eingeleitet.

Die Kraft und/oder das Drehmoment weisen mehrere Komponenten auf. Vorzugsweise weisen die Kraft und/oder das Drehmoment jeweils drei Komponenten auf. Jede der drei Komponenten wirkt entlang einer anderen von der Koordinaten eines dreidimensionalen Koordinatensystems. Das Messrad 1 ist eingerichtet, mindestens eine Komponente der Kraft und/oder des Drehmomentes aufzunehmen. Die Kraft und/oder das Drehmoment sind figürlich nicht dargestellt.

Das Messrad 1 weist mehrere Aufnehmereinheiten 2, 3 - 3" zur Messung der Kraft und/oder des Drehmomentes auf. Die Aufnehmereinheiten 2, 3 - 3" sind auf der Felge 7 im gleichen Abstand zur Nabe 6 und zueinander angeordnet. Die Aufnehmereinheiten 2, 3 - 3" haben die Funktion, für die Kraft und/oder das Drehmoment, die über den Radaufstandspunkt in das Messrad 1 eingeleitet werden, ein Messsignal bereitzustellen.

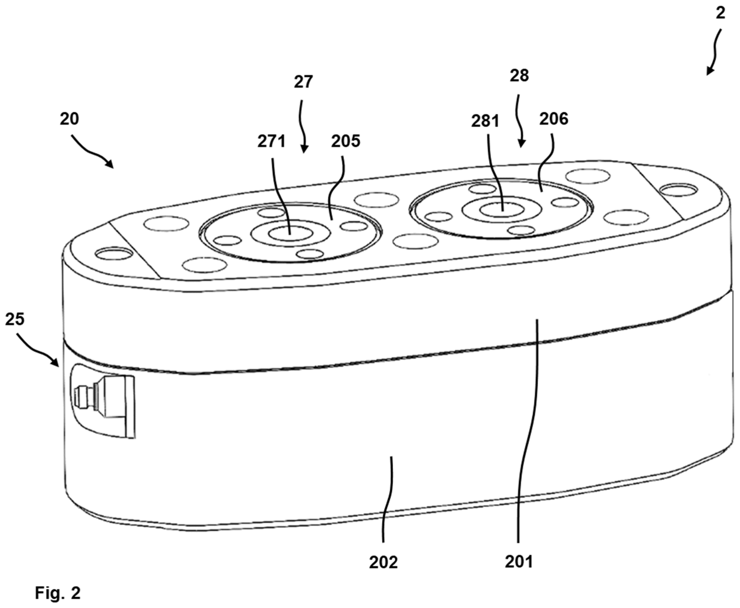

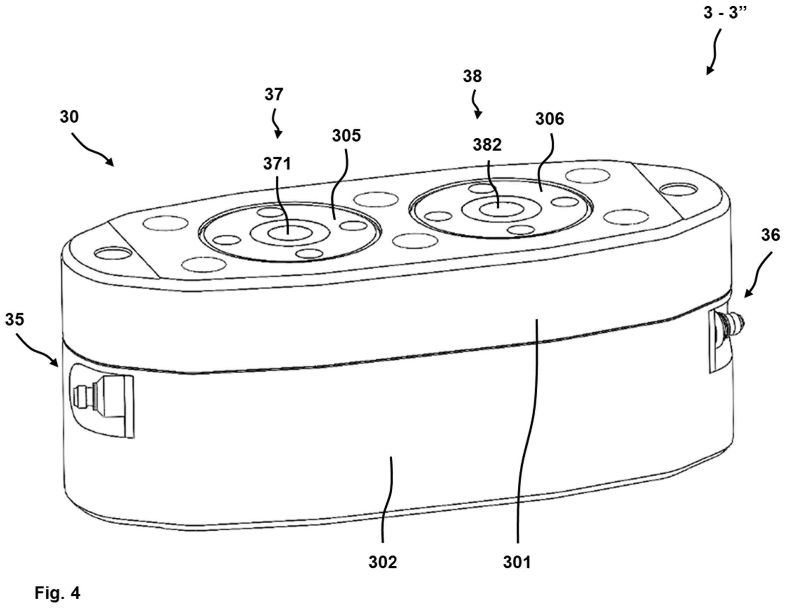

Bei den Aufnehmereinheiten 2, 3 - 3‴ wird zwischen einer Zweifachsummierer-Aufnehmereinheit 2 und einer Dreifachsummierer-Aufnehmereinheit 3 - 3" unterschieden. Die Fig. 2, 3 und 6 zeigen Details der Zweifachsummierer-Aufnehmereinheit 2. Die Fig. 4, 5, 7 und 8 zeigen Details der Dreifachsummierer-Aufnehmereinheit 3 - 3''.

In der Ansicht gemäss Fig. 1 sind beispielsweise vier Aufnehmereinheiten 2, 3 - 3" dargestellt. Die vier Aufnehmereinheiten 2, 3 - 3" umfassen eine Zweifachsummierer-Aufnehmereinheit 2, eine erste Dreifachsummierer-Aufnehmereinheit 3, eine zweite Dreifachsummierer-Aufnehmereinheit 3' und eine dritte Dreifachsummierer-Aufnehmereinheit 3". Bei Kenntnis der vorliegenden Erfindung kann der Fachmann ein Messrad mit mehr als vier oder mit weniger als vier Aufnehmereinheiten realisieren.

### DAS GEHÄUSE 20, 30

Jede Aufnehmereinheit 2, 3 - 3" weist ein Gehäuse 20, 30 und mehrere Messeinheiten 21, 22, 31, 32 auf.

Das Gehäuse 20, 30 hat die Funktion, die Messeinheiten 21, 22, 31, 32 vor schädlichen Umwelteinflüssen wie Staub, Feuchtigkeit, direkter Berührung, usw. zu schützen.

Das Gehäuse 20, 30 ist aus mechanisch beständigem Material wie Edelstahl. Vorzugsweise ist das Gehäuse 20, 30 mehrteilig.

Das Gehäuse 20, 30 weist eine Deckplatte 201, 301 und eine Grundplatte 202, 302 auf.

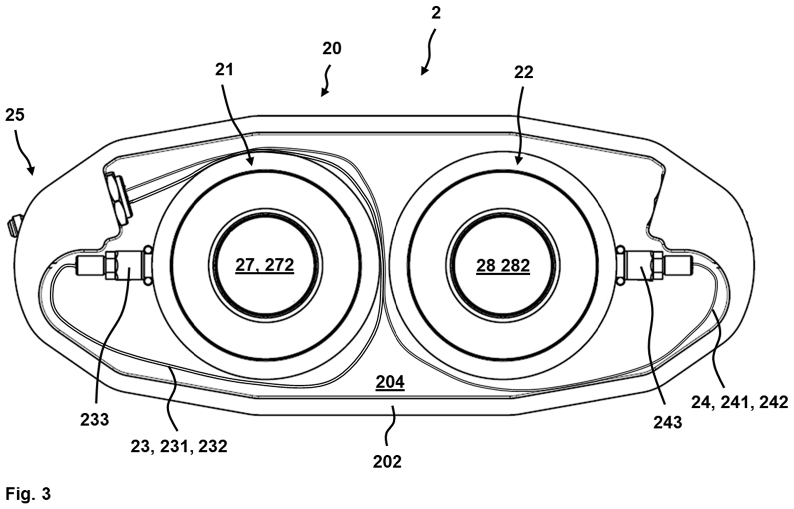

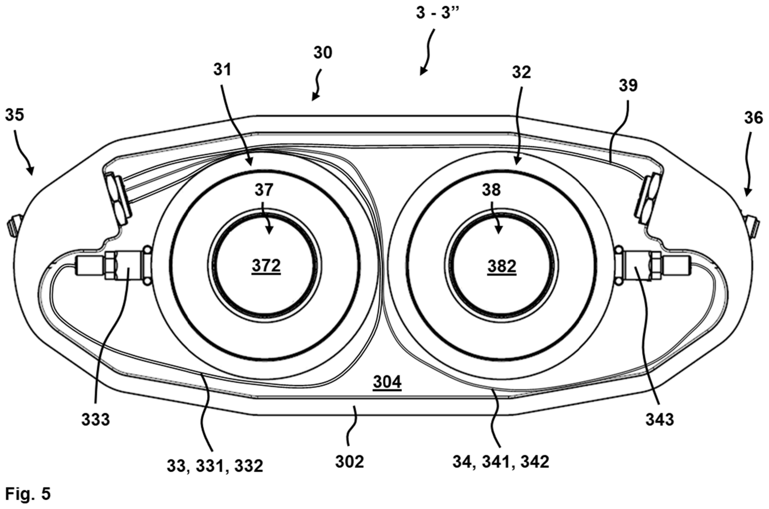

Die Fig. 2 zeigt das Gehäuse 20 der Zweifachsummierer-Aufnehmereinheit 2 in perspektivischer Ansicht mit einer Deckplatte 201 und einer Grundplatte 202. Die Fig. 3 zeigt das Gehäuse 20 der Zweifachsummierer-Aufnehmereinheit 2 in Draufsicht mit entfernter Deckplatte 201. Die Fig. 4 zeigt das Gehäuse 30 der Dreifachsummierer-Aufnehmereinheit 3 - 3" in perspektivischer Ansicht mit einer Deckplatte 301 und einer Grundplatte 302. Die Fig. 5 zeigt das Gehäuse 30 der Dreifachsummierer-Aufnehmereinheit 3 - 3'' in Draufsicht mit entfernter Deckplatte 301.

Die Deckplatte 201, 301 und die Grundplatte 202, 302 sind über Verbindungsmittel miteinander verbunden. Die Verbindungsmittel sind figürlich nicht dargestellt. Die Verbindung von Deckplatte 201, 301 und Grundplatte 202, 302 ist dicht. Im Sinne der vorliegenden Erfindung bedeutet Dichtheit die Erfüllung der Schutzklasse IP65 gemäss DIN EN 60529, vorzugsweise die Erfüllung der Schutzklasse IP67 gemäss DIN EN 60529. Die Erfüllung der Schutzklasse IP65 verhindert das Eindringen von Staub, sie bietet einen vollständigen Schutz gegen Berührung und gegen Strahlwasser aus beliebigem Winkel. Die Erfüllung der Schutzklasse IP67 verhindert das Eindringen von Staub, sie bietet einen vollständigen Schutz gegen Berührung und gegen Untertauchen in Wasser.

Das Gehäuse 20, 30 weist mehrere Befestigungsmittel auf. Das Gehäuse 20, 30 ist eingerichtet, über die Befestigungsmittel am Messrad 1 befestigt zu werden. Die Befestigungsmittel sind figürlich nicht abgebildet.

### DIE MESSEINHEITEN 21, 31, 22, 32

Die Messeinheiten 21, 22, 31, 32 haben die Funktion, für die Kraft und/oder das Drehmoment, die über den Radaufstandspunkt in das Messrad 1 eingeleitet werden, ein Messsignal zu erzeugen.

Die Messeinheiten 21, 22, 31, 32 sind im Gehäuse 20, 30 angeordnet. Vorzugsweise sind in jedem Gehäuse 20, 30 zwei Messeinheiten 21, 22, 31, 32 angeordnet. Bei Kenntnis der vorliegenden Erfindung kann der Fachmann eine Aufnehmereinheit mit mehr oder mit weniger als zwei Messeinheiten im Gehäuse realisieren.

Gemäss der Draufsicht der Fig. 3 weist die Zweifachsummierer-Aufnehmereinheit 2 zwei Messeinheiten 21, 22 auf, welche eine linke Messeinheit 21 und eine rechte Messeinheit 22 umfassen. Gemäss der Draufsicht der Fig. 5 weist die Dreifachsummierer-Aufnehmereinheit 3 - 3" zwei Messeinheiten 31, 32 auf, welche eine linke Messeinheit 31 und eine rechte Messeinheit 32 umfassen.

Vorzugsweise weist die Grundplatte 202, 302 eine Aussparung 204, 304 auf. Gemäss der Draufsicht der Zweifachsummierer-Aufnehmereinheit 2 der Fig. 3 sind die Messeinheiten 21, 22 in der Aussparung 204 angeordnet. Gemäss der Draufsicht der Dreifachsummierer-Aufnehmereinheit 3 - 3" der Fig. 5 sind die Messeinheiten 31, 32 in der Aussparung 304 angeordnet.

Das Gehäuse 20, 30 weist mehrere Abdeckungen 205, 206, 305, 306 auf. Die Abdeckungen 205, 206, 305, 306 sind scheibenförmig.

Gemäss den Ansicht der Fig. 2 weist die Zweifachsummierer-Aufnehmereinheit 2 zwei Abdeckungen 205, 206 auf, welche eine linke Abdeckung 205 und eine rechte Abdeckung 206 umfassen. Gemäss den Ansicht der Fig. 4 weist die Dreifachsummierer-Aufnehmereinheit 3 - 3'' zwei Abdeckungen 305, 306 auf, welche eine linke Abdeckung 305 und eine rechte Abdeckung 306 umfassen.

Das Gehäuse 20, 30 ist eingerichtet, im befestigten Zustand über die Abdeckungen 205, 206, 305, 306 die Kraft und/oder das Drehmoment auf die Messeinheiten 21, 22, 31, 32 zu leiten. Die Abdeckungen 205, 206, 305, 306 sind in Öffnungen der Deckplatte 201, 301 angeordnet. Die Öffnungen der Deckplatte 201, 301 reichen von ausserhalb des Gehäuses 20, 30 zu den Messeinheiten 21, 22, 31, 32 in der Aussparung 204, 304. Die in den Öffnungen der Deckplatte 201, 301 angeordneten Abdeckungen 205, 206, 305, 306 liegen direkt oberhalb der Messeinheiten 21, 22, 31, 32 in der Aussparung 204, 304 und leiten die Kraft und/oder das Drehmoment auf die Messeinheiten 21, 22, 31, 32. Gemäss der Ansicht der Zweifachsummierer-Aufnehmereinheit 2 der Fig. 2 ist die linke Abdeckung 205 in vertikaler Richtung direkt oberhalb der linken Messeinheit 21 angeordnet und die rechte Abdeckung 206 ist in vertikaler Richtung direkt oberhalb der rechten Messeinheit 22 angeordnet. Gemäss der Ansicht der Dreifachsummierer-Aufnehmereinheit 3 - 3" der Fig. 4 ist die linke Abdeckung 305 in vertikaler Richtung direkt oberhalb der linken Messeinheit 31 angeordnet und die rechte Abdeckung 306 ist in vertikaler Richtung direkt oberhalb der rechten Messeinheit 32 angeordnet.

Jede Aufnehmereinheit 2, 3 - 3" weist mehrere Vorspanneinheiten 27, 28, 37, 38 auf. Die Vorspanneinheiten 27, 28, 37, 38 haben die Funktion, die Messeinheiten 21, 22, 31, 32 mechanisch vorzuspannen. Aufgrund der mechanischen Vorspannung können die Messeinheiten 21, 22, 31, 32 dann sowohl eine positive Kraft und/oder ein positives Drehmoment als auch eine negative Kraft und/oder ein negatives Drehmoment messen.

Gemäss den Ansicht der Fig. 2 weist die Zweifachsummierer-Aufnehmereinheit 2 für die linke Abdeckung 205 und die linke Messeinheit 21 eine linke Vorspanneinheit 27 auf und für die rechte Abdeckung 206 und die rechte Messeinheit 22 weist sie eine rechte Vorspanneinheit 28 auf. Gemäss den Ansicht der Fig. 4 weist die Dreifachsummierer-Aufnehmereinheit 3 - 3" für die linke Abdeckung 305 und die linke Messeinheit 31 eine linke Vorspanneinheit 37 auf und für die rechte Abdeckung 306 und die rechte Messeinheit 32 weist sie eine rechte Vorspanneinheit 38 auf.

Jede Vorspanneinheit 27, 28, 37, 38 weist eine Vorspannschraube 271, 281, 371, 381 und eine ihr zugeordnete Vorspannbohrung 272, 282, 372, 382 auf.

Gemäss der Ansicht der Zweifachsummierer-Aufnehmereinheit 2 der Fig. 2 weist die linke Vorspanneinheit 27 eine linke Vorspannschraube 271 auf und die rechte Vorspanneinheit 28 weist eine rechte Vorspannschraube 281 auf. Gemäss der Draufsicht der Zweifachsummierer-Aufnehmereinheit 2 der Fig. 3 weist die linke Vorspanneinheit 27 eine linke Vorspannbohrung 272 auf und die rechte Vorspanneinheit 28 weist eine rechte Vorspannbohrung 282 auf. Gemäss der Ansicht der Dreifachsummierer-Aufnehmereinheit 3 - 3" der Fig. 4 weist die linke Vorspanneinheit 37 eine linke Vorspannschraube 371 auf und die rechte Vorspanneinheit 38 weist eine rechte Vorspannschraube 381 auf. Gemäss der Draufsicht der Dreifachsummierer-Aufnehmereinheit 3 - 3" der Fig. 5 weist die linke Vorspanneinheit 37 eine linke Vorspannbohrung 372 auf und die rechte Vorspanneinheit 38 weist eine rechte Vorspannbohrung 382 auf.

Die Vorspannbohrung 272, 282, 372, 382 ist in der Grundplatte 202, 302 angeordnet. Jede Abdeckung 205, 206, 305, 306 weist eine zentrale Öffnung auf. Jede der Vorspannschrauben 271, 282, 371, 381 ragt mit einem Gewindeabschnitt durch die zentrale Öffnung einer der Abdeckungen 205, 206, 305, 306. Bei jedem Gehäuse 20, 30 liegt die Vorspannschraube 271, 282, 371, 381 mit einem Kopfabschnitt an einer Abdeckung 205, 206, 305, 306 auf. Durch Schraubverbindungen der Vorspannschrauben 271, 272, 371, 381 mit den ihr zugeordneten Vorspannbohrungen 272, 282, 372, 382 erfolgt die mechanische Vorspannung der Messeinheiten 21, 22, 31, 32. Die Anordnung der Abdeckungen 205, 206, 305, 306 in den zentralen Öffnungen der Deckplatte 201, 301 und das Anliegen der Vorspannschrauben 271, 281, 371, 381 an den Abdeckungen 205, 206, 305, 306 ist dicht im Sinne der vorliegenden Erfindung.

Die Messeinheiten 21, 22, 31, 32 sind gleich aufgebaut. Jede Messeinheit 21, 22, 31, 32 weist einen Ringkörper aus mechanisch beständigem Material wie Edelstahl auf. Der Ringkörper umschliesst einen Innenraum der Messeinheit 21, 22, 31, 32. Im Innenraum sind piezoelektrisches Material wie Quarz, Galliumorthophosphat, usw. und Elektroden aus elektrisch leitfähigem Material angeordnet. Der Ringkörper umschliesst den Innenraum dicht im Sinne der vorliegenden Erfindung. Der Innenraum, das piezoelektrische Material und die Elektroden sind figürlich nicht dargestellt.

Die Messeinheiten 21, 22, 31, 32 arbeiten nach dem piezoelektrischen Messprinzip und erzeugen unter der Wirkung der Kraft und/oder des Drehmomentes elektrische Ladung als Messsignal. Die elektrische Ladung wird auf Oberflächen des piezoelektrischen Materials erzeugt und von den auf den Oberflächen des piezoelektrischen Materials angeordneten Elektroden abgegriffen. Die Menge der erzeugten elektrischen Ladung ist proportional zur Grösse der Kraft und/oder des Drehmomentes. Unter der Wirkung der Kraft und/oder des Drehmomentes erzeugt das piezoelektrische Material elektrische Ladung mit einem ersten Vorzeichen und einem zweiten Vorzeichen, welche Vorzeichen sich voneinander unterscheiden. Daher weist jede Messeinheit 21, 22, 31, 32 zur Messung von Kraft und/oder Drehmoment zwei Oberflächen des piezoelektrischen Materials und zwei auf diesen Oberflächen des piezoelektrischen Materials angeordnete Elektroden auf. Die Oberflächen umfassen eine erste Oberfläche und eine zweite Oberfläche. Die Elektroden umfassen eine erste Elektrode und eine zweite Elektrode. Auf der ersten Oberfläche wird elektrische Ladung mit dem ersten Vorzeichen erzeugt und von der ersten Elektrode abgegriffen. Auf der zweiten Oberfläche wird elektrische Ladung mit dem zweiten Vorzeichen erzeugt und von der zweiten Elektrode abgegriffen.

### DIE ELEKTRISCHEN LEITUNGEN 23, 24, 33, 34

Jede Aufnehmereinheit 2, 3 - 3" weist mehrere elektrische Leitungen 23, 24, 33, 34 und eine Durchführung 25, 35 auf. Die elektrischen Leitungen 23, 24, 33, 34 haben die Funktion, die elektrische Ladung von den Messeinheiten 21, 22, 31, 32 zur Durchführung 25, 35 abzuleiten.

Die elektrischen Leitungen 23, 24, 33, 34 sind in der Aussparung 204, 304 angeordnet. Gemäss der Draufsicht der Fig. 3 weist die Zweifachsummierer-Aufnehmereinheit 2 zwei elektrische Leitungen 23, 24 auf, welche eine linke elektrische Leitung 23 und eine rechte elektrische Leitung 24 umfassen. Gemäss der Draufsicht der Fig. 5 weist die Dreifachsummierer-Aufnehmereinheit 3 - 3" zwei elektrischen Leitungen 33, 34 auf, welche eine linke elektrische Leitung 33 und eine rechte elektrische Leitung 34 umfassen.

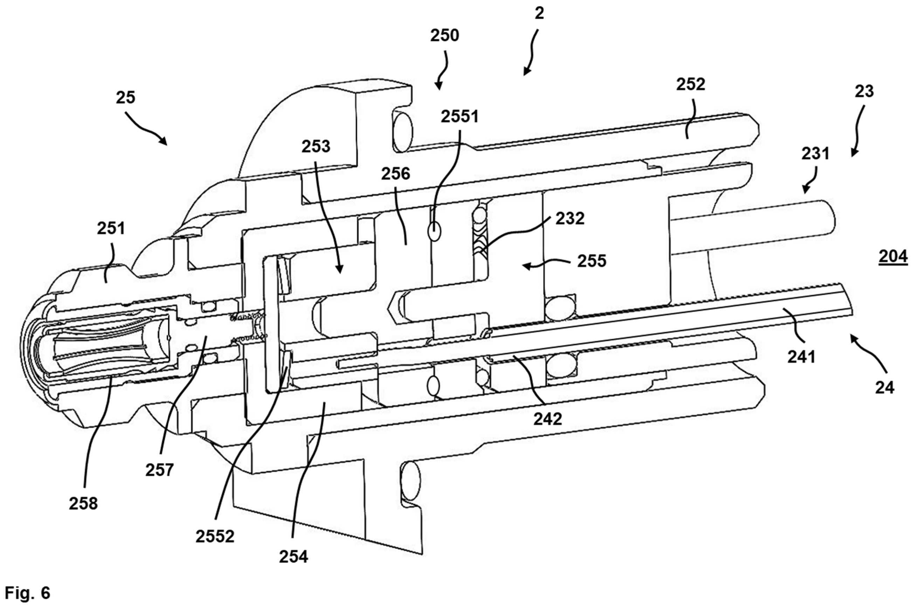

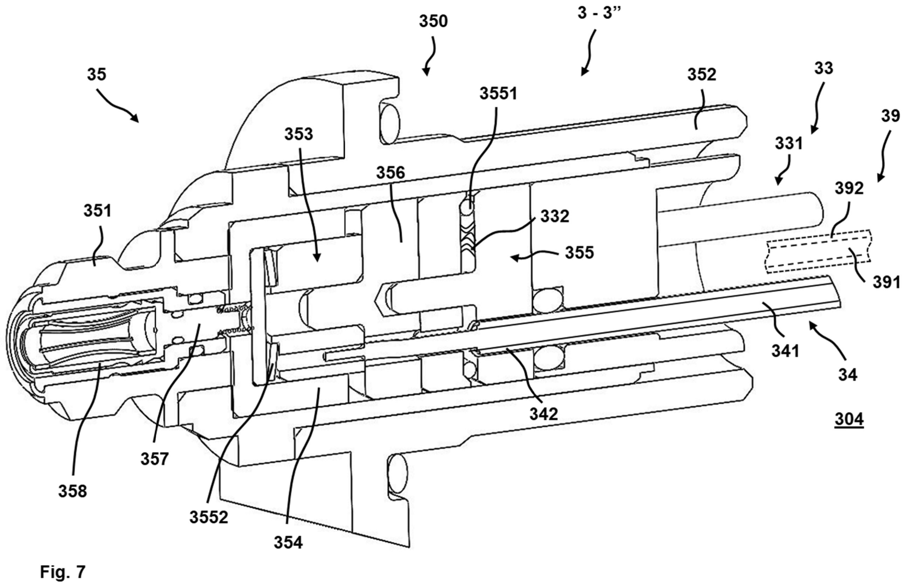

Die perspektivischen Ansichten der Fig. 6 und 7 zeigen Details der elektrischen Leitungen 23, 24, 33, 34. Jede elektrische Leitung 23, 24, 33, 34 weist mindestens einen Heissleiter 231, 241, 331, 341 und mindestens einen Kaltleiter 232, 242, 332, 342 auf.

Gemäss der Ansicht der Zweifachsummierer-Aufnehmereinheit 2 der Fig. 6 weist die linke elektrische Leitung 23 einen linken Heissleiter 231 und einen linken Kaltleiter 232 auf und die rechte elektrische Leitung 24 weist einen rechten Heissleiter 241 und einen rechten Kaltleiter 242 auf. Gemäss der Ansicht der Dreifachsummierer-Aufnehmereinheit 3 - 3" der Fig. 7 weist die linke elektrische Leitung 33 einen linken Heissleiter 331 und einen linken Kaltleiter 332 auf und die rechte elektrische Leitung 34 weist einen rechten Heissleiter 341 und einen rechten Kaltleiter 342 auf.

Vorzugsweise sind die elektrischen Leitungen 23, 24, 33, 34 Koaxialleitungen mit den Heissleitern 231, 241, 331, 341 als Seele und den Kaltleitern 232, 242, 332, 342 als Aussenleiter. Die Heissleiter 231, 241, 331, 341 und die Kaltleiter 232, 242, 332, 342 sind aus elektrisch leitfähigem Material. In jeder elektrischen Leitung 23, 24, 33, 34 sind der Heissleiter 231, 241, 331, 341 und der Kaltleiter 232, 242, 332, 342 durch eine elektrische Leiterisolation radial voneinander getrennt. Die elektrische Leiterisolation ist aus elektrisch isolierendem Material. Die elektrische Leiterisolation isoliert den Heissleiter 231, 241, 331, 341 elektrisch gegenüber dem Kaltleiter 232, 242, 332, 342. Vorzugsweise weist jede elektrische Leitung 23, 24, 33, 34 für jede gemessene Komponente von Kraft und/oder Drehmoment einen Heissleiter 231, 241, 331, 341 und einen Kaltleiter 232, 242, 332, 342 auf.

Die elektrischen Leitungen 23, 24, 33, 34 weisen ein erstes Ende und ein zweites Ende auf. Jede elektrische Leitung 23, 24, 33, 34 weist eine Verbindungshülse 233, 243, 333, 343 auf. Die Verbindungshülse 233, 243, 333, 343 ist aus mechanisch beständigem Material wie Edelstahl.

Gemäss der Draufsicht der Zweifachsummierer-Aufnehmereinheit 2 der Fig. 3 ist am ersten Ende der linken elektrischen Leitung 23 eine linke Verbindungshülse 233 angebracht und am ersten Ende der rechten elektrischen Leitung 24 ist eine rechte Verbindungshülse 243 angebracht. Gemäss der Draufsicht der Dreifachsummierer-Aufnehmereinheit 3 - 3" der Fig. 5 ist am ersten Ende der linken elektrischen Leitung 33 eine linke Verbindungshülse 333 angebracht und am ersten Ende der rechten elektrischen Leitung 34 ist eine rechte Verbindungshülse 343 angebracht.

Die Verbindungshülse 233, 243, 333, 343 umschliesst das erste Ende der elektrischen Leitung 23, 24, 33, 34 radial aussenseitig. Die Verbindungshülse 233, 243, 333, 343 bildet mit dem Ringkörper der Messeinheit 21, 22, 33, 34 eine Verbindung. Die Verbindung ist vorzugsweise eine kraft- und formschlüssige Verbindung wie eine Steckverbindung. Bei Kenntnis der vorliegenden Erfindung kann der Fachmann die Verbindung aber auch als eine andere kraft- und formschlüssige Verbindung wie eine Schraubverbindung, usw. oder als eine stoffschlüssige Verbindung wie eine Lötverbindung, usw. realisieren. Die Verbindung ist dicht im Sinne der vorliegenden Erfindung.

Im Bereich der Verbindung von Verbindungshülse 233, 243, 333, 343 und Ringkörper der Messeinheit 21, 22, 33, 34, weist der Ringkörper ein Durchgangsloch auf. Das Durchgangsloch reicht von ausserhalb der Messeinheit 21, 22, 33, 34 zum Innenraum der Messeinheit 21, 22, 33, 34. Der Heissleiter 231, 241, 331, 341 und der Kaltleiter 232, 242, 332, 342 des ersten Endes einer elektrischen Leitung 23, 24, 33, 34 ragen durch das Durchgangsloch zu den Elektroden im Innenraum der Messeinheit 21, 22, 33, 34. Der Heissleiter 231, 241, 331, 341 ist elektrisch mit der ersten Elektrode kontaktiert. Der Kaltleiter 232, 242, 332, 342 ist elektrisch mit der zweiten Elektrode kontaktiert.

Jede der beiden elektrischen Leitungen 23, 24, 33, 34 ist elektrisch mit einer der beiden Messeinheiten 21, 22, 31, 32 und dem Heissleitersummierelement 253, 353 kontaktiert. Gemäss der Draufsicht der Zweifachsummierer-Aufnehmereinheit 2 der Fig. 3 leitet der linke Heissleiter 231 von der linken Messeinheit 21 elektrische Ladung mit dem ersten Vorzeichen ab und der linke Kaltleiter 232 leitet von der linken Messeinheit 21 elektrische Ladung mit dem zweiten Vorzeichen ab. Der rechte Heissleiter 241 leitet von der rechten Messeinheit 22 elektrische Ladung mit dem ersten Vorzeichen ab. Der rechte Kaltleiter 242 leitet von der rechten Messeinheit 22 elektrische Ladung mit dem zweiten Vorzeichen ab. Gemäss der Draufsicht der Dreifachsummierer-Aufnehmereinheit 3 - 3" der Fig. 5 leitet der linke Heissleiter 331 von der linken Messeinheit 31 elektrische Ladung mit dem ersten Vorzeichen ab und der linke Kaltleiter 332 leitet von der linken Messeinheit 31 elektrische Ladung mit dem zweiten Vorzeichen ab. Der rechte Heissleiter 341 leitet von der rechten Messeinheit 32 elektrische Ladung mit dem ersten Vorzeichen ab. Der rechte Kaltleiter 342 leitet von der rechten Messeinheit 32 elektrische Ladung mit dem zweiten Vorzeichen ab.

### DIE DURCHFÜHRUNG 25, 35

Die Durchführung 25, 35 hat die Funktion, elektrische Ladung aus dem Gehäuse 20, 30 nach ausserhalb des Gehäuses 20, 30 zu leiten.

Gemäss der Fig. 2 und 3 weist die Zweifachsummierer-Aufnehmereinheit 2 eine Durchführung 25 auf, welche am Gehäuse 20 angebracht ist. Gemäss der Fig. 4 und 5 weist die Dreifachsummierer-Aufnehmereinheit 3 - 3" eine Durchführung 35 auf, welche am Gehäuse 30 angebracht ist.

Vorzugsweise ist die Durchführung 25, 35 an der Grundplatte 202, 302 des Gehäuses 20, 30 angebracht. Im Bereich der Anbringung der Durchführung 25, 35 an der Grundplatte 202, 302 weist die Grundplatte 202, 302 eine Durchgangsöffnung auf. Die Durchgangsöffnung der Grundplatte 202, 302 reicht von ausserhalb des Gehäuses 20, 30 zur Aussparung 204, 304 im Gehäuse 20, 30.

Die Ansicht der Fig. 6 zeigt Details der Durchführung 25 der Zweifachsummierer-Aufnehmereinheit 2 und die Ansicht der Fig. 7 zeigt Details der Durchführung 35 die Dreifachsummierer-Aufnehmereinheit 3 - 3".

Die Durchführung 25, 35 weist einen Flansch 250, 350 auf. Der Flansch 250, 350 ist aus mechanisch beständigem Material wie Edelstahl. Über den Flansch 250, 350 ist die Durchführung 25, 35 in der Durchgangsöffnung der Grundplatte 202, 302 angebracht. Die Anbringung der Durchführung 25, 35 an der Grundplatte 202, 302 ist vorzugsweise eine kraft- und formschlüssige Verbindung wie eine Schraubverbindung. Die Anbringung der Durchführung 25, 35 an der Grundplatte 202, 302 ist dicht im Sinne der vorliegenden Erfindung. Bei Kenntnis der vorliegenden Erfindung kann der Fachmann die Anbringung der Anbringung der Durchführung an der Grundplatte auch als stoffschlüssige Verbindung wie eine Schweissverbindung, usw. realisieren.

Die Durchführung 25, 35 ist eingerichtet, die elektrische Ladung nach ausserhalb des Gehäuses 20, 30 zu leiten. Gemäss der Ansicht der Fig. 6 weist die Zweifachsummierer-Aufnehmereinheit 2 dazu einen Flansch 250 auf, welcher ein in horizontaler Richtung von der Aussparung 204 weg gerichtetes linkes Ende 251 aufweist und welcher ein in horizontaler Richtung zur Aussparung 204 hin gerichtetes rechtes Ende 252 aufweist. Gemäss der Ansicht der Fig. 7 weist die Dreifachsummierer-Aufnehmereinheit 3 - 3" dazu einen Flansch 350 auf, welcher ein in horizontaler Richtung von der Aussparung 304 weg gerichtetes linkes Ende 351 aufweist und welcher ein in horizontaler Richtung zur Aussparung 304 hin gerichtetes rechtes Ende 352 aufweist. Das linke Ende 251, 351 ist buchsenförmig und umschliesst einen linken Hohlraum der Durchführung 25, 35. Das rechte Ende 252, 352 ist hohlzylinderförmig und umschliesst einen rechten Hohlraum der Durchführung 25, 35.

Die Durchführung 25, 35 weist ein Heissleitersummierelement 253, 353, ein Heissleiter-Isolationselement 254, 354, ein Kaltleitersummierelement 255, 355 und ein Kaltleiter-Isolationselement 256, 356 auf. Das Heissleitersummierelement 253, 353 und das Kaltleitersummierelement 255, 355 sind aus elektrisch leitfähigem Material. Das Heissleiter-Isolationselement 254, 354 und das Kaltleiter-Isolationselement 256, 356 sind aus elektrisch isolierendem Material.

Gemäss der Ansicht der Fig. 6 weist die Zweifachsummierer-Aufnehmereinheit 2 ein Heissleitersummierelement 253, ein Heissleiter-Isolationselement 254, ein Kaltleitersummierelement 255 und ein Kaltleiter-Isolationselement 256 auf, welche im rechten Hohlraum des rechten Endes 252 angeordnet sind. Gemäss der Ansicht der Fig. 7 weist die Dreifachsummierer-Aufnehmereinheit 3 - 3" ein Heissleitersummierelement 353, ein elektrisches Heissleiter-Isolationselement 354, ein Kaltleitersummierelement 355 und ein elektrisches Kaltleiter-Isolationselement 356 auf, welche im rechten Hohlraum des rechten Endes 352 angeordnet sind.

Das Heissleiter-Isolationselement 254, 354 isoliert das Heissleitersummierelement 253, 353 in vertikaler Richtung der Ansichten der Fig. 6 und 7 elektrisch gegenüber dem rechten Ende 252, 352.

Das Kaltleiter-Isolationselement 256, 356 isoliert das Heissleitersummierelement 253, 353 in horizontaler Richtung der Ansichten der Fig. 6 und 7 elektrisch gegenüber dem Kaltleitersummierelement 255, 355.

Die Heissleiter 231, 241, 331, 341 und die Kaltleiter 232, 242, 332, 342 des zweiten Endes der elektrischen Leitungen 23, 24, 33, 34 ragen in den rechten Hohlraum des rechten Endes 252, 352.

Die Heissleiter 231, 241, 331, 341 des zweiten Endes der elektrischen Leitungen 23, 24, 33, 34 sind elektrisch mit dem Heissleitersummierelement 253, 353 kontaktiert. Die linken Heissleiter 231, 331 leiten von der linken Messeinheit 21, 31 elektrische Ladung mit dem ersten Vorzeichen zum Heissleitersummierelement 253, 353 ab. Die rechten Heissleiter 241, 341 leiten von der rechten Messeinheit 22, 32 elektrische Ladung mit dem ersten Vorzeichen zum Heissleitersummierelement 253, 353 ab.

Die elektrische Kontaktierung der Heissleiter 231, 241, 331, 341 mit dem Heissleitersummierelement 253, 353 ist vorzugsweise eine kraft- und formschlüssige Verbindung wie eine Klemmverbindung, eine Schraubverbindung, usw. oder eine stoffschlüssige Verbindung wie eine Lötverbindung, usw.

Die Kaltleiter 232, 242, 332, 342 des zweiten Endes der elektrischen Leitungen 23, 24, 33, 34 sind elektrisch mit dem Kaltleitersummierelement 255, 355 kontaktiert. Die linken Kaltleiter 232, 332 leiten von der linken Messeinheit 21, 31 elektrische Ladung mit dem zweiten Vorzeichen zum Kaltleitersummierelement 255, 355 ab. Die rechten Kaltleiter 242, 342 leiten von der rechten Messeinheit 22, 32 elektrische Ladung mit dem zweiten Vorzeichen zum Kaltleitersummierelement 255, 355 ab.

Vorzugsweise liegt das Kaltleitersummierelement 255, 355 auf einem Massepotential des Messrades 1. Das Massepotential ist ein elektrisches Referenzpotenzial wie 0 V.

Die elektrische Kontaktierung der Kaltleiter 232, 242, 332, 342 mit dem Kaltleitersummierelement 255, 355 ist vorzugsweise eine kraft- und formschlüssige Verbindung wie eine Klemmverbindung, eine Schraubverbindung, usw. oder eine stoffschlüssige Verbindung wie eine Lötverbindung, usw. Vorzugsweise ist die elektrische Kontaktierung der Kaltleiter 232, 242, 332, 342 mit dem Kaltleitersummierelement 255, 355 eine Klemmverbindung. Dazu weist die Durchführung 25, 35 ein Ringelement 2551, 3551 und ein Federelement 2552, 3552 aus elektrisch leitfähigem Material auf.

Gemäss der Ansicht der Zweifachsummierer-Aufnehmereinheit 2 der Fig. 6 weist die Durchführung 25 ein Ringelement 2551 und ein Federelement 2552 auf. Gemäss der Ansicht der Dreifachsummierer-Aufnehmereinheit 3 - 3" der Fig. 7 weist die Durchführung 35 ein Ringelement 3551 und ein Federelement 3552 auf.

Der Kaltleiter 232, 242, 332, 342 besteht aus einzelnen Drähten, welche gemäss der Ansichten der Fig. 6 und 7 in einer vertikalen Ebene zwischen dem Kaltleitersummierelement 255, 355 und dem Ringelement 2551, 3551 angeordnet sind. Das Federelement 2552, 3552 ist eingerichtet, das Ringelement 2551, 3551 gemäss der Ansichten der Fig. 6 und 7 in horizontaler Richtung mit einer Kraft gegen das Kaltleitersummierelement 255, 355 zu drücken und damit die Kaltleiter 232, 242, 332, 342 elektrisch mit dem Kaltleitersummierelement 255, 355 zu kontaktieren.

Die Durchführung 25, 35 weist ein elektrisches Kontaktelement 257, 357 aus elektrisch leitfähigem Material und ein Isolationselement 258, 358 aus elektrisch isolierendem Material auf.

Gemäss der Ansicht der Fig. 6 weist die Zweifachsummierer-Aufnehmereinheit 2 ein elektrisches Kontaktelement 257 und ein Isolationselement 258 auf, welche im linken Hohlraum des linken Endes 251 angeordnet sind. Gemäss der Ansicht der Fig. 7 weist die Dreifachsummierer-Aufnehmereinheit 3 - 3" ein elektrisches Kontaktelement 357 und ein Isolationselement 358 auf, welche im linken Hohlraum des linken Endes 351 angeordnet sind.

Das Isolationselement 258, 358 isoliert das elektrische Kontaktelement 257, 357 in vertikaler Richtung der Ansichten der Fig. 6 und 7 elektrisch gegenüber dem linken Ende 251, 351.

Der linke Hohlraum des linken Endes 251, 351 und der rechte Hohlraum des rechten Endes 252, 352 kommunizieren in vertikaler Richtung der Ansichten der Fig. 6 und 7 bereichsweise miteinander. Das elektrische Kontaktelement 257, 357 ist über diese Kommunikation elektrisch mit dem Heissleitersummierelement 253, 353 kontaktiert. Das elektrische Kontaktelement 257, 357 ist im Bereich dieser Kommunikation durch das Heissleiter-Isolationselement 254, 354 und das Isolationselement 258, 358 elektrisch gegenüber dem linken Ende 251, 351 und dem rechten Ende 252, 352 isoliert.

### DIE WEITERE DURCHFÜHRUNG 36

Die Zweifachsummierer-Aufnehmereinheit 2 und die Dreifachsummierer-Aufnehmereinheiten 3 - 3" unterscheiden sich darin, dass die Dreifachsummierer-Aufnehmereinheit 3 - 3" eine weitere Durchführung 36 und eine weitere elektrische Leitung 39 aufweist, während die Zweifachsummierer-Aufnehmereinheit 2 keine weitere Durchführung und keine weitere elektrische Leitung aufweist.

Die weitere Durchführung 36 hat die Funktion, weitere elektrische Ladung von ausserhalb des Gehäuses 30 in das Gehäuse 30 zu leiten.

Gemäss den Fig. 4 und 5 weist die Dreifachsummierer-Aufnehmereinheit 3 - 3" eine weitere Durchführung 36 auf, welche am Gehäuse 30 angebracht ist.

Vorzugsweise ist die weitere Durchführung 36 an der Grundplatte 302 des Gehäuses 30 angebracht. Im Bereich der Anbringung der weiteren Durchführung 36 an der Grundplatte 302 weist die Grundplatte 302 eine weitere Durchgangsöffnung auf. Die weitere Durchgangsöffnung der Grundplatte 302 reicht von ausserhalb des Gehäuses 30 zur Aussparung 304 im Gehäuse 30.

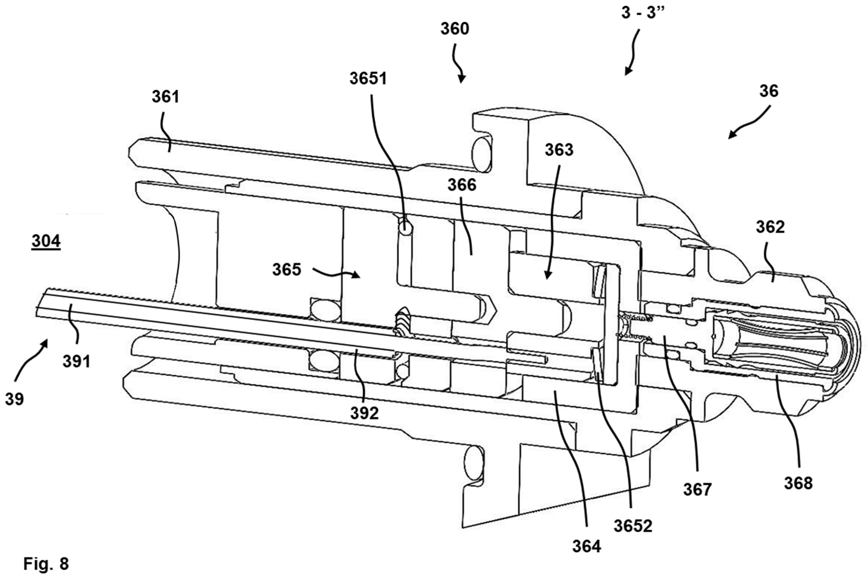

Die perspektivische Ansicht der Dreifachsummierer-Aufnehmereinheit 3 - 3" der Fig. 8 zeigt Details der weiteren Durchführung 36. Die weitere Durchführung 36 weist einen weiteren Flansch 360 auf. Der weitere Flansch 360 ist aus mechanisch beständigem Material wie Edelstahl. Über den weiteren Flansch 360 ist die weitere Durchführung 36 in der weiteren Durchgangsöffnung der Grundplatte 302 angebracht.

Die Anbringung der weiteren Durchführung 36 an der Grundplatte 302 ist vorzugsweise eine stoffschlüssige Verbindung wie eine Schweissverbindung, usw. Die Anbringung der weiteren Durchführung 36 an der Grundplatte 302 ist dicht im Sinne der vorliegenden Erfindung.

Die weitere Durchführung 36 ist eingerichtet, die weitere elektrische Ladung von ausserhalb des Gehäuses 30 in das Gehäuse 30 zu leiten. Gemäss der Ansicht der Fig. 8 weist die Dreifachsummierer-Aufnehmereinheit 3 - 3" dazu einen weiteren Flansch 360 auf, welcher ein in horizontaler Richtung zur Aussparung 304 hin gerichtetes linkes weiteres Ende 361 aufweist und welcher ein in horizontaler Richtung von der Aussparung 304 weg gerichtetes rechtes weiteres Ende 362 aufweist. Das linke weitere Ende 361 ist hohlzylinderförmig und umschliesst einen linken weiteren Hohlraum der weiteren Durchführung 36. Das rechte weitere Ende 362 ist buchsenförmig und umschliesst einen rechten weiteren Hohlraum der weiteren Durchführung 36.

Die weitere Durchführung 36 weist ein Heissleiterkontaktelement 363, ein weiteres Heissleiter-Isolationselement 364, ein Kaltleiterkontaktelement 365 und ein weiteres Kaltleiter-Isolationselement 366 auf. Das Heissleiterkontaktelement 363 und das Kaltleiterkontaktelement 365 sind aus elektrisch leitfähigem Material. Das weitere Heissleiter-Isolationselement 364 und das weitere Kaltleiter-Isolationselement 366 sind aus elektrisch isolierendem Material.

Gemäss der Ansicht der Fig. 8 weist die Dreifachsummierer-Aufnehmereinheit 3 - 3" ein Heissleiterkontaktelement 363, ein weiteres Heissleiter-Isolationselement 364, ein Kaltleiterkontaktelement 365 und ein weiteres Kaltleiter-Isolationselement 366 auf, welche im linken weiteren Hohlraum des linken weiteren Endes 361 angeordnet sind.

Das weitere Heissleiter-Isolationselement 364 isoliert das Heissleiterkontaktelement 363 in vertikaler Richtung der Ansicht der Fig. 8 elektrisch gegenüber dem linken weiteren Ende 361.

Das weitere Kaltleiter-Isolationselement 366 isoliert das Heissleiterkontaktelement 363 in horizontaler Richtung der Ansicht der Fig. 8 elektrisch gegenüber dem Kaltleiterkontaktelement 365.

### DIE WEITERE ELEKTRISCHEN LEITUNG 39

Die weitere elektrische Leitung 39 hat die Funktion, weitere elektrische Ladung von der weiteren Durchführung 36 zur Durchführung 35 abzuleiten.

Die Ansichten der Dreifachsummierer-Aufnehmereinheit 3 - 3" der Fig. 7 und 8 zeigen Details der weiteren elektrischen Leitung 39. Die elektrische Leitung 39 ist in der Aussparung 304 angeordnet. Jede elektrische Leitung 39 weist mindestens einen weiteren Heissleiter 391 und mindestens einen weiteren Kaltleiter 392 auf.

Vorzugsweise ist die weitere elektrische Leitung 39 eine Koaxialleitung mit dem weiteren Heissleiter 391 als Seele und dem weiteren Kaltleiter 392 als Aussenleiter. Der weitere Heissleiter 391 und der weitere Kaltleiter 392 sind aus elektrisch leitfähigem Material. In der weiteren elektrischen Leitung 39 sind der weitere Heissleiter 391 und der weitere Kaltleiter 392 durch eine weitere elektrische Leiterisolation radial voneinander getrennt. Die weitere elektrische Leiterisolation ist aus elektrisch isolierendem Material. Die weitere elektrische Leiterisolation isoliert den weiteren Heissleiter 391 elektrisch gegenüber dem weitere Kaltleiter 392. Vorzugsweise weist die weitere elektrische Leitung 39 für jede gemessene Komponente von Kraft und/oder Drehmoment einen weiteren Heissleiter 391 und einen weiteren Kaltleiter 392 auf.

Die weitere elektrische Leitung 39 weist ein erstes Ende und ein zweites Ende auf.

Der weitere Heissleiter 391 und der weitere Kaltleiter 392 des ersten Endes der weiteren elektrischen Leitung 39 ragen in den linken weiteren Hohlraum des linken weiteren Endes 361.

Der weitere Heissleiter 391 des ersten Endes der weiteren elektrischen Leitung 39 ist elektrisch mit dem Heissleiterkontaktelement 363 der weiteren Durchführung 36 kontaktiert.

Die elektrische Kontaktierung des weiteren Heissleiters 391 mit dem Heissleiterkontaktelement 363 ist vorzugsweise eine kraft- und formschlüssige Verbindung wie eine Klemmverbindung, eine Schraubverbindung, usw. oder eine stoffschlüssige Verbindung wie eine Lötverbindung, usw.

Der weitere Kaltleiter 392 des ersten Endes der weiteren elektrischen Leitung 39 ist elektrisch mit dem Kaltleiterkontaktelement 365 der weiteren Durchführung 36 kontaktiert.

Vorzugsweise liegt das Kaltleiterkontaktelement 365 auf einem Massepotential des Messrades 1. Das Massepotential ist ein elektrisches Referenzpotenzial wie 0 V.

Die elektrische Kontaktierung des weiteren Kaltleiters 392 mit dem Kaltleiterkontaktelement 365 ist vorzugsweise eine kraft- und formschlüssige Verbindung wie eine Klemmverbindung, eine Schraubverbindung, usw. oder eine stoffschlüssige Verbindung wie eine Lötverbindung, usw. Gemäss der Ansicht der Fig. 8 ist die elektrische Kontaktierung des weiteren Kaltleiters 392 mit dem Kaltleiterkontaktelement 365 eine Klemmverbindung. Dazu weist die weitere Durchführung 36 ein weiteres Ringelement 3651 und ein weiteres Federelement 3652 aus elektrisch leitfähigem Material auf.

Der weitere Kaltleiter 392 besteht aus einzelnen Drähten, welche gemäss der Ansicht der Fig. 8 in einer vertikalen Ebene zwischen dem Kaltleiterkontaktelement 365 und dem weiteren Ringelement 3651 angeordnet sind. Das weitere Federelement 3652 ist eingerichtet, das weitere Ringelement 3651 gemäss der Ansicht der Fig. 8 in horizontaler Richtung mit einer Kraft gegen das Kaltleiterkontaktelement 365 zu drücken und damit den weiteren Kaltleiter 392 elektrisch mit dem Kaltleiterkontaktelement 365 zu kontaktieren.

Gemäss der Ansicht der Dreifachsummierer-Aufnehmereinheit 3 - 3" der Fig. 8 leitet der weitere Heissleiter 391 vom Heissleiterkontaktelement 363 der weiteren Durchführung 36 weitere elektrische Ladung mit dem ersten Vorzeichen ab. Der weitere Kaltleiter 392 leitet vom Kaltleiterkontaktelement 365 der weiteren Durchführung 36 weitere elektrische Ladung mit dem zweiten Vorzeichen ab.

Gemäss der Ansicht der Dreifachsummierer-Aufnehmereinheit 3 - 3" der Fig. 7 ragen der weitere Heissleiter 391 und der weitere Kaltleiter 392 des zweiten Endes der weiteren elektrischen Leitung 39 in den rechten Hohlraum des rechten Endes 352.

Der weitere Heissleiter 391 des zweiten Endes der weiteren elektrischen Leitung 39 ist elektrisch mit dem Heissleitersummierelement 353 der Durchführung 35 der Dreifachsummierer-Aufnehmereinheit 3 - 3" kontaktiert. Der weitere Heissleiter 391 leitet weitere elektrische Ladung mit dem ersten Vorzeichen zum Heissleitersummerelement 353 der Durchführung 35 ab.

Die elektrische Kontaktierung des weiteren Heissleiters 391 mit dem Heissleitersummierelement 353 der Dreifachsummierer-Aufnehmereinheit 3 - 3" ist vorzugsweise eine kraft- und formschlüssige Verbindung wie eine Klemmverbindung, eine Schraubverbindung, usw. oder eine stoffschlüssige Verbindung wie eine Lötverbindung, usw.

Der weitere Kaltleiter 392 des zweiten Endes der weiteren elektrischen Leitung 39 ist elektrisch mit dem Kaltleitersummierelement 355 der Durchführung 35 der Dreifachsummierer-Aufnehmereinheit 3 - 3" kontaktiert. Der weitere Kaltleiter 392 leitet weitere elektrische Ladung mit dem zweiten Vorzeichen zum Kaltleitersummierelement 355 der Durchführung 35 ab.

Die elektrische Kontaktierung des weiteren Kaltleiters 392 mit dem Kaltleitersummierelement 355 ist vorzugsweise eine kraft- und formschlüssige Verbindung wie eine Klemmverbindung, eine Schraubverbindung, usw. oder eine stoffschlüssige Verbindung wie eine Lötverbindung, usw. Gemäss der Ansicht der Fig. 7 ist die elektrische Kontaktierung des weiteren Kaltleiters 392 mit dem Kaltleitersummierelement 355 eine Klemmverbindung.

Der weitere Kaltleiter 392 besteht aus einzelnen Drähten, welche gemäss der Ansicht der Dreifachsummierer-Aufnehmereinheit 3 - 3" der Fig. 7 in der vertikalen Ebene zwischen dem Kaltleitersummierelement 355 und dem Ringelement 3551 angeordnet sind. Das Federelement 3552 ist eingerichtet, das Ringelement 3551 gemäss der Ansicht der Fig. 7 in horizontaler Richtung mit einer Kraft gegen das Kaltleitersummierelement 355 zu drücken und damit den weiteren Kaltleiter 392 elektrisch mit dem Kaltleitersummierelement 355 zu kontaktieren.

Gemäss der Ansicht der Dreifachsummierer-Aufnehmereinheit 3 - 3" der Fig. 8 weist die weitere Durchführung 36 ein weiteres elektrisches Kontaktelement 367 aus elektrisch leitfähigem Material und ein weiteres Isolationselement 368 aus elektrisch isolierendem Material auf. Das weitere elektrische Kontaktelement 367 und das weitere Isolationselement 368 sind im rechten weiteren Hohlraum des rechten weiteren Endes 362 angeordnet.

Das weitere Isolationselement 368 isoliert das weitere elektrische Kontaktelement 367 in vertikaler Richtung der Ansicht der Fig. 8 elektrisch gegenüber dem rechten weiteren Ende 362.

Der linke weitere Hohlraum des linke weiteren Endes 361 und der rechte weitere Hohlraum des rechten weiteren Endes 362 kommunizieren in vertikaler Richtung der Ansicht der Fig. 8 bereichsweise miteinander. Das weitere elektrische Kontaktelement 367 ist über diese Kommunikation elektrisch mit dem Heissleiterkontaktelement 363 kontaktiert. Das weitere elektrische Kontaktelement 367 ist im Bereich dieser Kommunikation durch das weitere Heissleiter-Isolationselement 364 und das weitere Isolationselement 368 elektrisch gegenüber dem linken weiteren Ende 361 und dem rechten weiteren Ende 362 isoliert.

Somit leiten bei der Zweifachsummierer-Aufnehmereinheit 2 zwei Heissleiter 231, 241 elektrische Ladung mit dem ersten Vorzeichen von den beiden Messeinheiten 21, 22 zum Heissleitersummierelement 253 der Durchführung 25 ab. Es findet also eine Zweifachsummierung statt. Bei der Dreifachsummierer-Aufnehmereinheit 3 - 3" hingegen leiten zwei Heissleiter 331, 341 elektrische Ladung mit dem ersten Vorzeichen von den beiden Messeinheiten 31, 32 zum Heissleitersummierelement 353 der Durchführung 35 und zusätzlich leitet der weitere Heissleiter 391 weitere elektrische Ladung mit dem ersten Vorzeichen von der weiteren Durchführung 36 zum Heissleitersummierelement 353 der Durchführung 35 ab. Es findet also eine Dreifachsummierung statt.

Und bei der Zweifachsummierer-Aufnehmereinheit 2 leiten zwei Kaltleiter 232, 242 elektrische Ladung mit dem zweiten Vorzeichen von den beiden Messeinheiten 21, 22 zum Kaltleitersummierelement 255 der Durchführung 25. Es findet also eine Zweifachsummierung statt. Während bei der Dreifachsummierer-Aufnehmereinheit 3 - 3" zwei Kaltleiter 332, 342 elektrische Ladung mit dem zweiten Vorzeichen von den beiden Messeinheiten 31, 32 zum Kaltleitersummierelement 355 der Durchführung 35 leiten und zusätzlich der weitere Kaltleiter 392 von der weiteren Durchführung 36 weitere elektrische Ladung mit dem zweiten Vorzeichen zum Kaltleitersummierelement 355 der Durchführung 35 ableitet. Es findet also eine Dreifachsummierung statt.

Bei Kenntnis der vorliegenden Erfindung kann der Fachmann im Messrad 1 gemäss Fig. 1 anstelle der Zweifachsummierer-Aufnehmereinheit 2 gemäss Fig. 2, 3 und 6 auch eine Dreifachsummierer-Aufnehmereinheit 3 - 3" gemäss Fig. 4, 5, 7 und 8 verwenden. Da mit der Zweifachsummierer-Aufnehmereinheit 2 im Messrad 1 gemäss Fig. 1 nur eine Zweifachsummierung erfolgt, werden der weitere Heissleiter 391 und der weitere Kaltleiter 392 der Durchführung 35 gemäss der Ansicht der Fig. 7 dann nicht verwendet. Und auch die weitere Durchführung 36 und die weitere elektrische Leitung 39 gemäss Fig. 4, 5 und 8 werden dann nicht verwendet. Dies bringt jedoch einen wirtschaftlichen Gleichteilvorteil, da im Messrad 1 gemäss Fig. 1 dann sowohl die Zweifachsummierer-Aufnehmereinheit 2 als auch die Dreifachsummierer-Aufnehmereinheit 3 - 3" gleich gebaut sind. Damit wird die Vielfalt der Aufnehmereinheiten auf ein Gleichteil reduziert, was die Herstellkosten senkt.

Weiter kann der Fachmann bei Kenntnis der vorliegenden Erfindung in der Zweifachsummierer-Aufnehmereinheit 2 anstelle der Durchführung 25 gemäss Fig. 2, 3 und 6 auch eine Durchführung 35 gemäss Fig. 4, 5 und 7 der Dreifachsummierer-Aufnehmereinheit 3 - 3" verwenden. Da mit der Zweifachsummierer-Aufnehmereinheit 2 im Messrad 1 gemäss Fig. 1 nur eine Zweifachsummierung erfolgt, werden der weitere Heissleiter 391 und der weitere Kaltleiter 392 der Durchführung 35 gemäss der Ansicht der Fig. 7 dann nicht verwendet. Auch dies bringt einen wirtschaftlichen Gleichteilvorteil, da im Messrad 1 gemäss Fig. 1 dann sowohl die Zweifachsummierer-Aufnehmereinheit 2 als auch die Dreifachsummierer-Aufnehmereinheit 3 - 3" die gleiche Durchführung 35 aufweisen, was die Vielfalt der Durchführungen reduziert und die Herstellkosten senkt.

### DIE ELEKTRONISCHE SCHALTUNG 4

Das Messrad 1 weist eine elektronische Schaltung 4 auf. Die elektronische Schaltung 4 hat die Funktion, die elektrische Ladung auszuwerten.

Die elektronische Schaltung 4 weist ein Gehäuse 40 auf. Das Gehäuse 40 hat die Funktion, elektronische Komponenten der elektronischen Schaltung 4 vor schädlichen Umwelteinflüssen wie Staub, Feuchtigkeit, direkter Berührung, usw. zu schützen.

Das Gehäuse 40 der elektronischen Schaltung 4 ist aus mechanisch beständigem Material wie Edelstahl. Vorzugsweise ist das Gehäuse 40 mehrteilig. Das Gehäuse 40 weist eine Deckplatte 401 und eine Grundplatte 402 auf. Die Deckplatte 401 und die Grundplatte 402 sind über Verbindungsmittel miteinander verbunden. Die Verbindungsmittel sind figürlich nicht dargestellt. Die Verbindung von Deckplatte 401 und Grundplatte 402 ist dicht im Sinne der vorliegenden Erfindung.

Das Gehäuse 40 der elektronischen Schaltung 4 weist mehrere Befestigungsmittel auf. Das Gehäuse 40 ist eingerichtet, über die Befestigungsmittel am Messrad 1 befestigt zu werden. Die Befestigungsmittel sind figürlich nicht abgebildet.

Die elektronische Schaltung 4 weist eine Durchführung 45 auf. Die Durchführung 45 hat die Funktion, elektrische Ladung von ausserhalb des Gehäuses 40 in das Gehäuse 40 zu leiten.

Gemäss der Fig. 8 ist die Durchführung 45 der elektronischen Schaltung 4 am Gehäuse 40 angebracht.

Vorzugsweise ist die Durchführung 45 an der Grundplatte 402 des Gehäuses 40 der elektronischen Schaltung 4 angebracht. Im Bereich der Anbringung der Durchführung 45 an der Grundplatte 402 weist die Grundplatte 402 eine Durchgangsöffnung auf. Die Durchgangsöffnung der Grundplatte 402 reicht von ausserhalb des Gehäuses 40 in das Gehäuse 40.

Gemäss der Ansicht der Fig. 8 weist die Durchführung 45 der elektronischen Schaltung 4 ein elektrisches Kontaktelement 457 und ein elektrisches Isolationselement auf.

Das elektrische Isolationselement isoliert das elektrische Kontaktelement 457 in vertikaler Richtung der Ansichten der Fig. 8 elektrisch gegenüber dem Gehäuse 40.

Die elektronische Schaltung 4 ist eingerichtet, die elektrische Ladung auszuwerten. Die Auswertung der elektrischen Ladung umfasst eine elektrische Verstärkung der elektrischen Ladung, eine Wandelung der elektrischen Ladung in eine elektrische Spannung, eine Digitalisierung der elektrischen Spannung in Messdaten, eine Funkübermittlung der Messdaten, usw. Dazu weist die elektronische Schaltung 4 elektronische Komponenten auf. Die elektronischen Komponenten sind figürlich nicht abgebildet.

### DIE SIGNALKABEL 5 - 5‴

Das Messrad 1 weist mehrere Signalkabel 5 - 5‴ auf. Die Signalkabel 5 - 5‴ haben die Funktion, die elektrische Ladung und die weitere elektrische Ladung der Aufnehmereinheiten 2, 3 - 3" zur elektronischen Schaltung 4 abzuleiten.

Jedes Signalkabel 5 - 5‴ weist mindestens einen heissen Signalleiter und mindestens einen kalten Signalleiter auf. Die Signalkabel 5 - 5‴ sind gleich aufgebaut. Die heissen Signalleiter und die kalten Signalleiter sind figürlich nicht abgebildet.

Gemäss der Ansicht der Fig. 1 umfassen die Signalkabel 5 - 5‴ ein erstes Signalkabel 5, ein zweites Signalkabel 5', ein drittes Signalkabel 5'' und ein viertes Signalkabel 5‴.

Vorzugsweise sind die Signalkabel 5 - 5‴ Koaxialkabel mit den heissen Signalleitern als Seele und den kalten Signalleitern als Aussenleiter. Die heissen Signalleiter und die kalten Signalleiter sind aus elektrisch leitfähigem Material. In jedem Signalkabel 5 - 5‴ sind der heisse Signalleiter und der kalte Signalleiter durch eine elektrische Kabelisolation radial voneinander getrennt. Die elektrische Kabelisolation ist aus elektrisch isolierendem Material. Die elektrische Kabelisolation isoliert den heissen Signalleiter elektrisch gegenüber dem kalten Signalleiter. Vorzugsweise weist jedes Signalkabel 5 - 5''' für jede gemessene Komponente von Kraft und/oder Drehmoment einen heissen Signalleiter und einen kalten Signalleiter auf.

Gemäss der Ansicht der Fig. 1 weist jedes Signalkabel 5 - 5‴ ein linkes Kabelende 55 - 55‴ und ein rechtes Kabelende 56 - 56''' auf. Die linken Kabelenden 55 - 55‴ und die rechten Kabelenden 56 - 56‴ sind als Stecker ausgebildet. Jeder Stecker ist eingerichtet, mit der Durchführung 25, 35 der Aufnehmereinheit 2, 3 - 3" oder mit der weiteren Durchführung 36 der Aufnehmereinheit 3 - 3" oder mit der Durchführung 45 der elektronischen Schaltung 4 eine kraft- und formschlüssige Verbindung wie eine Steckverbindung zu bilden. Die Steckverbindung ist eine mechanische Verbindung mit der Durchführung 25, 35 der Aufnehmereinheit 2, 3 - 3" oder mit der weiteren Durchführung 36 der Aufnehmereinheit 3 - 3" oder mit der Durchführung 45 der elektronischen Schaltung 4. Die Steckverbindung ist eine elektrische Verbindung mit dem elektrischen Kontaktelement 257, 357 der Durchführung 25, 35 der Aufnehmereinheit 2, 3 - 3" oder mit dem weiteren elektrischen Kontaktelement 367 der weiteren Durchführung 36 der Aufnehmereinheit 3 - 3" oder mit dem elektrischen Kontaktelement 457 der Durchführung 45 der elektronischen Schaltung 4. Die Steckverbindung ist lösbar. Die Steckverbindung ist dicht im Sinne der vorliegenden Erfindung.

Gemäss der Ansicht der Fig. 1 ist das erste Signalkabel 5 mit seinem linken Kabelende 55 mit der Durchführung 25 der Zweifachsummierer-Aufnehmereinheit 2 verbunden und der heisse Signalleiter des linken Kabelendes 55 kontaktiert das elektrische Kontaktelement 257 der Durchführung 25 und leitet elektrische Ladung mit dem ersten Vorzeichen der Zweifachsummierer-Aufnehmereinheit 2 ab. Mit seinem rechten Kabelende 56 ist das erste Signalkabel 5 mit der weiteren Durchführung 36 der ersten Dreifachsummierer-Aufnehmereinheit 3 verbunden und der heisse Signalleiter des rechten Kabelendes 56 kontaktiert das weitere elektrische Kontaktelement 367 der weiteren Durchführung 36 und leitet elektrische Ladung mit dem ersten Vorzeichen der Zweifachsummierer-Aufnehmereinheit 2 als weitere elektrische Ladung mit dem ersten Vorzeichen zur Dreifachsummierer-Aufnehmereinheit 3 ab.

Gemäss der Ansicht der Fig. 1 ist das zweite Signalkabel 5' mit seinem linken Kabelende 55' mit der Durchführung 35 der ersten Dreifachsummierer-Aufnehmereinheit 3 verbunden und der heisse Signalleiter des linken Kabelendes 55' kontaktiert das elektrische Kontaktelement 357 der Durchführung 35 und leitet elektrische Ladung mit dem ersten Vorzeichen der ersten Dreifachsummierer-Aufnehmereinheit 3 ab. Mit seinem rechten Kabelende 56' ist das zweite Signalkabel 5' mit der weiteren Durchführung 36 der zweiten Dreifachsummierer-Aufnehmereinheit 3' verbunden und der heisse Signalleiter des rechten Kabelendes 56' kontaktiert das weitere elektrische Kontaktelement 367 der weiteren Durchführung 36 und leitet elektrische Ladung mit dem ersten Vorzeichen der ersten Dreifachsummierer-Aufnehmereinheit 3 als weitere elektrische Ladung mit dem ersten Vorzeichen zur zweiten Dreifachsummierer-Aufnehmereinheit 3'.

Gemäss der Ansicht der Fig. 1 ist das dritte Signalkabel 5'' mit seinem linken Kabelende 55'' mit der Durchführung 35 der zweiten Dreifachsummierer-Aufnehmereinheit 3' verbunden und der heisse Signalleiter des linken Kabelendes 55" kontaktiert das elektrische Kontaktelement 357 der Durchführung 35 und leitet elektrische Ladung mit dem ersten Vorzeichen der zweiten Dreifachsummierer-Aufnehmereinheit 3' ab. Mit seinem rechten Kabelende 56'' ist das dritte Signalkabel 5" mit der weiteren Durchführung 36 der dritten Dreifachsummierer-Aufnehmereinheit 3" verbunden und der heisse Signalleiter des rechten Kabelendes 56'' kontaktiert das weitere elektrische Kontaktelement 367 der weiteren Durchführung 36 und leitet elektrische Ladung mit dem ersten Vorzeichen der zweiten Dreifachsummierer-Aufnehmereinheit 3' als weitere elektrische Ladung mit dem ersten Vorzeichen zur dritten Dreifachsummierer-Aufnehmereinheit 3''.

Gemäss der Ansicht der Fig. 1 ist das vierte Signalkabel 5‴ mit seinem linken Kabelende 55‴ mit der Durchführung 35 der dritten Dreifachsummierer-Aufnehmereinheit 3" verbunden und der heisse Signalleiter des linken Kabelendes 55‴ kontaktiert das elektrische Kontaktelement 357 der Durchführung 35 und leitet elektrische Ladung mit dem ersten Vorzeichen der dritten Dreifachsummierer-Aufnehmereinheit 3" ab. Mit seinem rechten Kabelende 56‴ ist das vierte Signalkabel 5‴ mit der Durchführung 45 der elektronischen Schaltung 4 verbunden und der heisse Signalleiter des rechten Kabelendes 56‴ kontaktiert das elektrische Kontaktelement 457 der Durchführung 45 der elektronischen Schaltung 4 und leitet elektrische Ladung mit dem ersten Vorzeichen der dritten Dreifachsummierer-Aufnehmereinheit 3" als weitere elektrische Ladung mit dem ersten Vorzeichen zur elektronischen Schaltung 4.

### Bezugszeichenliste

- 1: Messrad
- 2: Zweifachsummierer-Aufnehmereinheit
- 3 - 3": Dreifachsummierer-Aufnehmereinheit
- 4: elektronische Schaltung
- 5 - 5‴: Signalkabel
- 6: Nabe
- 7: Felge
- 8: Reifen
- 20, 30, 40: Gehäuse
- 21, 31: linke Messeinheit
- 22, 32: rechte Messeinheit
- 23, 33: linke elektrische Leitung
- 24, 34: rechte elektrische Leitung
- 25, 35, 45: Durchführung
- 27, 37: linke Vorspanneinheit
- 28, 38: rechte Vorspanneinheit
- 36: weitere Durchführung
- 39: weitere elektrische Leitung
- 55 - 55‴: linkes Kabelende
- 56 - 56‴: rechtes Kabelende
- 201, 301, 401: Deckplatte
- 202, 302, 402: Grundplatte
- 204, 304: Aussparung
- 205, 305: linke Abdeckung
- 206, 306: rechte Abdeckung
- 231, 331: linker Heissleiter
- 232, 332: linker Kaltleiter
- 233, 333: linke Verbindungshülse
- 241, 341: rechter Heissleiter
- 242, 342: rechter Kaltleiter
- 243, 343: linke Verbindungshülse
- 250, 350: Flansch
- 251, 351: linkes Ende
- 252, 352: rechtes Ende
- 253, 353: Heissleitersummierelement
- 254, 354: Heissleiter-Isolationselement
- 255, 355: Kaltleitersummierelement
- 256, 356: Kaltleiter-Isolationselement
- 257, 357, 457: elektrisches Kontaktelement
- 258, 358: Isolationselement
- 271, 371: linke Vorspannschraube
- 272, 372: linke Vorspannbohrung
- 281, 381: rechte Vorspannschraube
- 282, 382: rechte Vorspannbohrung
- 360: weiterer Flansch
- 361: linkes weiteres Ende
- 362: rechtes weiteres Ende
- 363: Heissleiterkontaktelement
- 364: weiteres Heissleiter-Isolationselement
- 365: Kaltleiterkontaktelement
- 366: weiteres Kaltleiter-Isolationselement
- 367: weiteres elektrisches Kontaktelement
- 368: weiteres Isolationselement
- 391: weiterer Heissleiter
- 392: weiterer Kaltleiter
- 2551, 3551: Ringelement
- 2552, 3552: Federelement
- 3651: weiteres Ringelement
- 3652: weiteres Federelement

## Patentansprüche

1. Aufnehmereinheit (2, 3 - 3'') zur Messung von Kraft und/oder Drehmoment an Rädern eines Fahrzeuges; mit einem Gehäuse (20, 30) und mehreren Messeinheiten (21, 22, 31, 32), welche Messeinheiten (21, 22, 31, 32) im Gehäuse (20, 30) angeordnet sind, welches Gehäuse (20, 30) eingerichtet ist, die Kraft und/oder das Drehmoment auf die Messeinheiten (21, 22, 31, 32) zu leiten, welche Messeinheiten (21, 22, 31, 32) nach dem piezoelektrischen Messprinzip arbeiten und unter der Wirkung der Kraft und/oder des Drehmomentes elektrische Ladung erzeugen; mit mehreren elektrischen Leitungen (23, 24, 33, 34) und einer Durchführung (25, 35), welche elektrischen Leitungen (23, 24, 33, 34) im Gehäuse (20, 30) angeordnet sind und die elektrische Ladung von den Messeinheiten (21, 22, 31, 32) zur Durchführung (25, 35) ableiten, welche Durchführung (25, 35) am Gehäuse (20, 30) angebracht ist, und welche Durchführung (25, 35) eingerichtet ist, die elektrische Ladung nach ausserhalb des Gehäuses (20, 30) zu leiten; **dadurch gekennzeichnet, dass** die Aufnehmereinheit (3 - 3'') eine weitere Durchführung (36) und eine weitere elektrische Leitung (39) aufweist; dass die weitere Durchführung (36) am Gehäuse (30) angebracht ist; dass die weitere Durchführung (36) eingerichtet ist, weitere elektrische Ladung von ausserhalb des Gehäuses (30) in das Gehäuse (30) zu leiten; und dass die weitere elektrische Leitung (39) im Gehäuse (30) angeordnet ist und die weitere elektrische Ladung von der weiteren Durchführung (36) zur Durchführung (35) ableitet.

2. Aufnehmereinheit (3 - 3'') gemäss Anspruch 1, **dadurch gekennzeichnet, dass** die Aufnehmereinheit (2, 3 - 3'') zwei Messeinheiten (21, 22, 31, 32) und zwei elektrische Leitungen (23, 24, 33, 34) aufweist; dass die Durchführung (25, 35) ein Heissleitersummierelement (253, 353) aufweist; und dass jede der beiden elektrischen Leitungen (23, 24, 33, 34) elektrisch mit einer der beiden Messeinheiten (21, 22, 31, 32) und dem Heissleitersummierelement (253, 353) kontaktiert ist.

3. Aufnehmereinheit (3 - 3'') gemäss Anspruch 2, **dadurch gekennzeichnet, dass** die weitere elektrische Leitung (39) elektrisch mit dem Heissleitersummierelement (353) kontaktiert ist; und dass das Heissleitersummierelement (353) elektrische Ladung von den beiden Messeinheiten (31, 32) und weitere elektrische Ladung von der weiteren Durchführung (36) aufsummiert und die Aufnehmereinheit (3 - 3") eine Dreifachsummierer-Aufnehmereinheit (3 - 3") bildet.

4. Aufnehmereinheit (3 - 3'') gemäss Anspruch 1, **dadurch gekennzeichnet, dass** das Gehäuse (20, 30) eine Deckplatte (201, 301) und eine Grundplatte (202, 302) aufweist; dass die Grundplatte (202, 302) eine Aussparung (204, 304) aufweist; dass die Messeinheiten (21, 22, 31, 32) in der Aussparung (204, 304) angeordnet sind; dass das Gehäuse (20, 30) mehrere Abdeckungen (205, 206, 305, 306) aufweist; dass die Deckplatte (201, 301) Öffnungen aufweist und die Abdeckungen (205, 206, 305, 306) in den Öffnungen der Deckplatte (201, 301) angeordnet sind; und dass die in den Öffnungen der Deckplatte (201, 301) angeordneten Abdeckungen (205, 206, 305, 306) direkt oberhalb der Messeinheiten (21, 22, 31, 32) in der Aussparung (204, 304) liegen und die Kraft und/oder das Drehmoment auf die Messeinheiten (21, 22, 31, 32) leiten.

5. Aufnehmereinheit (3 - 3") gemäss Anspruch 4, **dadurch gekennzeichnet, dass** die Aufnehmereinheit (2, 3 - 3'') mehrere Vorspanneinheiten (27, 28, 37, 38) aufweist; dass jede Vorspanneinheit (27, 28, 37, 38) eine Vorspannschraube (271, 281, 371, 381) und eine ihr zugeordnete Vorspannbohrung (272, 282, 372, 382) aufweist; dass bei jedem Gehäuse (20, 30) die Vorspannschraube (271, 281, 371, 381) mit einem Kopfabschnitt an der Abdeckung (205, 206, 305, 306) anliegt und die der Vorspannschraube (271, 281, 371, 381) zugeordnete Vorspannbohrung (272, 282, 372, 382) in der Grundplatte (202, 302) angeordnet ist; und dass durch Schraubverbindung der Vorspannschrauben (271, 272, 371, 381) in den ihnen zugeordneten Vorspannbohrungen (272, 282, 372, 382) eine mechanische Vorspannung der Messeinheiten (21, 22, 31, 32) erfolgt.

6. Aufnehmereinheit (3 - 3") gemäss Anspruch 4, **dadurch gekennzeichnet, dass** jede Messeinheit (21 22, 31, 32) einen Ringkörper und ein Durchgangsloch aufweist, welches Durchgangsloch von ausserhalb der Messeinheit (21, 22, 31, 32) zu einem Innenraum der Messeinheit (21, 22, 31, 32); dass jede Messeinheit (21, 22, 31, 32) im Innenraum piezoelektrisches Material aufweist, welches piezoelektrische Material unter der Wirkung der Kraft und/oder des Drehmomentes elektrische Ladung erzeugt; und dass jede Messeinheit (21, 22, 31, 32) im Innenraum Elektroden aufweist, welche Elektroden auf Oberflächen des piezoelektrischen Materials angeordnet sind und die elektrische Ladung abgreifen.

7. Aufnehmereinheit (3 - 3'') gemäss Anspruch 6, **dadurch gekennzeichnet, dass** jede Messeinheit (21, 22, 31, 32) zur Messung von Kraft und/oder Drehmoment zwei Oberflächen des piezoelektrischen Materials und zwei auf diesen Oberflächen des piezoelektrischen Materials angeordnete Elektroden aufweist, welche Oberflächen eine erste Oberfläche und eine zweite Oberfläche umfassen, welche Elektroden eine erste Elektrode und eine zweite Elektrode umfassen; dass das piezoelektrische Material unter der Wirkung der Kraft und/oder des Drehmomentes auf der ersten Oberfläche elektrische Ladung mit einem ersten Vorzeichen erzeugt und die erste Elektrode die elektrische Ladung mit dem ersten Vorzeichen abgreift; und dass das piezoelektrische Material unter der Wirkung der Kraft und/oder des Drehmomentes auf der zweiten Oberfläche elektrische Ladung mit einem zweiten Vorzeichen erzeugt und die zweite Elektrode die elektrische Ladung mit dem zweiten Vorzeichen abgreift.

8. Aufnehmereinheit (3 - 3'') gemäss Anspruch 7, **dadurch gekennzeichnet, dass** die elektrischen Leitungen (23, 24, 33, 34) in der Aussparung (204, 304) angeordnet sind; dass jede elektrische Leitung (23, 24, 33, 34) ein erstes Ende und ein zweites Ende aufweist; dass jede elektrische Leitung (23, 24, 33, 34) mindestens einen Heissleiter (231, 241, 331, 341) und mindestens einen Kaltleiter (232, 242, 332, 342) aufweist; dass bei jeder Messeinheit (21, 22, 31, 32) das erste Ende einer elektrischen Leitung (23, 24, 33, 34) durch das Durchgangsloch zu den Elektroden im Innenraum der Messeinheit (21, 22, 31, 32) ragt und der Heissleiter (231, 241, 331, 341) mit der ersten Elektrode elektrische kontaktiert ist und der Kaltleiter (232, 242, 332, 342) mit der zweiten Elektrode elektrische kontaktiert ist.

9. Aufnehmereinheit (3 - 3'') gemäss Anspruch 8, **dadurch gekennzeichnet, dass** die Durchführung (25, 35) ein Heissleitersummierelement (253, 353) und ein Kaltleitersummierelement (255, 355) aufweist; dass die Heissleiter (231, 241, 331, 341) der zweiten Enden der elektrischen Leitungen (23, 24, 33, 34) elektrisch mit dem Heissleitersummierelement (253, 353) kontaktiert sind; und dass die Kaltleiter (232, 242, 332, 342) der zweiten Enden der elektrischen Leitungen (23, 24, 33, 34) elektrisch mit dem Kaltleitersummierelement (255, 355) kontaktiert sind.

10. Aufnehmereinheit (3 - 3'') gemäss Anspruch 9, **dadurch gekennzeichnet, dass** die Durchführung (25, 35) ein Ringelement (2551, 3551) und ein Federelement (2552, 3552) aufweist; dass die Kaltleiter (232, 242, 332, 342) aus einzelnen Drähten bestehen, welche in einer vertikalen Ebene zwischen dem Kaltleitersummierelement (255, 355) und dem Ringelement (2551, 3551) angeordnet sind; und dass das Federelement (2552, 3552) eingerichtet ist, das Ringelement (2551, 3551) in horizontaler Richtung mit einer Kraft gegen das Kaltleitersummierelement (255, 355) zu drücken und damit die Kaltleiter (232, 242, 332, 342) elektrisch mit dem Kaltleitersummierelement (255, 355) zu kontaktieren.

11. Messrad (1) für ein Fahrzeug; mit mehreren Aufnehmereinheiten (2, 3 - 3") zur Messung von Kraft und/oder Drehmoment an Rädern des Fahrzeuges; welches Messrad (1) eingerichtet ist, am Fahrzeug montiert zu werden, und auf welches Messrad (1) im montierten Zustand die Kraft und/oder das Drehmoment wirken; wobei jede Aufnehmereinheit (2, 3") mehrere Messeinheiten (21, 22, 31, 32) und ein Gehäuse (20, 30) aufweist, welche Messeinheiten (21, 22, 31, 32) im Gehäuse (20, 30) angeordnet sind, welches Gehäuse (20, 30) eingerichtet ist, am Messrad (1) befestigt zu werden und im befestigten Zustand die Kraft und/oder das Drehmoment auf die Messeinheiten (21, 22, 31, 32) zu leiten; welche Messeinheiten (21, 22, 31, 32) nach dem piezoelektrischen Messprinzip arbeiten und unter der Wirkung der Kraft und/oder des Drehmomentes elektrische Ladung erzeugen; wobei jede Aufnehmereinheit (2, 3 - 3'') mehrere elektrische Leitungen (23, 24, 33, 34) und eine Durchführung (25, 35) aufweist, welche elektrischen Leitungen (23, 24, 33, 34) im Gehäuse (20, 30) angeordnet sind und die elektrische Ladung von den Messeinheiten (21, 22, 31, 32) zur Durchführung (25, 35) ableiten, welche Durchführung (25, 35) am Gehäuse (20, 30) angebracht ist, und welche Durchführung (25, 35) eingerichtet ist, die elektrische Ladung nach ausserhalb des Gehäuses (20, 30) zu leiten; **dadurch gekennzeichnet, dass** mindestens eine Aufnehmereinheit (3 - 3'') eine weitere Durchführung (36) und eine weitere elektrische Leitung (39) aufweist; dass die weitere Durchführung (36) am Gehäuse (30) angebracht ist; dass die weitere Durchführung (36) eingerichtet ist, weitere elektrische Ladung von ausserhalb des Gehäuses (30) in das Gehäuse (30) zu leiten; und dass die weitere elektrische Leitung (39) im Gehäuse (30) angeordnet ist und die weitere elektrische Ladung von der weiteren Durchführung (36) zur Durchführung (35) ableitet.

12. Messrad (1) gemäss Anspruch 11, **dadurch gekennzeichnet, dass** die Aufnehmereinheit (2) zwei Messeinheiten (21, 22) und zwei elektrische Leitungen (23, 24) aufweist; dass die Durchführung (25) ein Heissleitersummierelement (253) aufweist; und dass jede der beiden elektrischen Leitungen (23, 24) elektrisch mit einer der beiden Messeinheiten (21, 22) und dem Heissleitersummierelement (253) kontaktiert ist; und dass das Heissleitersummierelement (253) elektrische Ladung von den beiden Messeinheiten (21, 22) aufsummiert und die Aufnehmereinheit (2) eine Zweifachsummierer-Aufnehmereinheit (2) bildet.

13. Messrad (1) gemäss Anspruch 12, **dadurch gekennzeichnet, dass** die Aufnehmereinheit (3 - 3'') zwei Messeinheiten (31, 32) und zwei elektrische Leitungen (33, 34) aufweist; dass die Durchführung (35) ein Heissleitersummierelement (353) aufweist; und dass jede der beiden elektrischen Leitungen (33, 34) elektrisch mit einer der beiden Messeinheiten (31, 32) und dem Heissleitersummierelement (353) kontaktiert ist; dass die weitere elektrische Leitung (39) elektrisch mit dem Heissleitersummierelement (353) kontaktiert ist; dass das Heissleitersummierelement (353) elektrische Ladung von den beiden Messeinheiten (31, 32) und weitere elektrische Ladung von der weiteren Durchführung (36) aufsummiert und die Aufnehmereinheit (3 - 3'') eine Dreifachsummierer-Aufnehmereinheit (3 - 3") bildet.

14. Messrad (1) gemäss Anspruch 13, **dadurch gekennzeichnet, dass** das Messrad (1) eine elektronische Schaltung (4) und mehrere Signalkabel (5 - 5‴) aufweist; dass die elektronische Schaltung (4) eine Durchführung (45) aufweist; dass jedes Signalkabel (5 - 5‴) ein linkes Kabelende (55 - 55‴) und ein rechtes Kabelende (56 - 56''') aufweist, welche linken Kabelenden (55 - 55‴) und rechten Kabelenden (56 - 56''') als Stecker ausgebildet sind; und dass jeder Stecker eingerichtet ist, mit der Durchführung (25) der Zweifachsummierer-Aufnehmereinheit (2) oder mit der Durchführung (35) der Dreifachsummierer-Aufnehmereinheit (3 - 3") oder mit der weiteren Durchführung (36) der Dreifachsummierer-Aufnehmereinheit (3 - 3'') oder mit der Durchführung (45) der elektronischen Schaltung (4) eine Steckverbindung zu bilden.

15. Messrad (1) gemäss Anspruch 14, **dadurch gekennzeichnet, dass** die Dreifachsummierer-Aufnehmereinheiten (3 - 3'') eine erste Dreifachsummierer-Aufnehmereinheit (3), eine zweite Dreifachsummierer-Aufnehmereinheit (3') und eine dritte Dreifachsummierer-Aufnehmereinheit (3'') umfassen; dass die Signalkabel (5 - 5‴) ein erstes Signalkabel (5), ein zweites Signalkabel (5'), ein drittes Signalkabel (5'') und ein viertes Signalkabel (5‴) umfassen; und dass das erste Signalkabel (5) mit seinem linke Kabelende (55) mit der Durchführung (25) der Zweifachsummierer-Aufnehmereinheit (2) verbunden ist und mit seinem rechten Kabelende (56) mit der weiteren Durchführung (36) der ersten Dreifachsummierer-Aufnehmereinheit (3) verbunden ist; dass das zweite Signalkabel (5') mit seinem linke Kabelende (55') mit der Durchführung (35) der ersten Dreifachsummierer-Aufnehmereinheit (3) verbunden ist und mit seinem rechten Kabelende (56') mit der weiteren Durchführung (36) der zweiten Dreifachsummierer-Aufnehmereinheit (3') verbunden ist; dass das dritte Signalkabel (5'') mit seinem linke Kabelende (55'') mit der Durchführung (35) der zweiten Dreifachsummierer-Aufnehmereinheit (3') verbunden ist und mit seinem rechten Kabelende (56'') mit der weiteren Durchführung (36) der dritten Dreifachsummierer-Aufnehmereinheit (3'') verbunden ist; und dass das vierte Signalkabel (5''') mit seinem linke Kabelende (55‴) mit der Durchführung (35) der dritten Dreifachsummierer-Aufnehmereinheit (3'') verbunden ist und mit seinem rechten Kabelende (56''') mit der Durchführung (45) der elektronischen Schaltung (4) verbunden ist.
